Europäisches Patentamt

European Patent Office

Office européen des brevets

(19)

(11) **EP 1 394 981 A2**

(12) **EUROPEAN PATENT APPLICATION**

(43) Date of publication:
**03.03.2004 Bulletin 2004/10**

(51) Int Cl.[7]: **H04L 9/30**, H04L 9/32

(21) Application number: **03017861.0**

(22) Date of filing: **05.08.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **06.08.2002 JP 2002229114
23.06.2003 JP 2003178295**

(71) Applicant: **Hitachi, Ltd.
Chiyoda-ku, Tokyo 101-8010 (JP)**

(72) Inventor: **Nishioka, Motosugu, Hitachi, Ltd
Chiyoda-ku Tokyo 100-8220 (JP)**

(74) Representative: **Strehl Schübel-Hopf & Partner
Maximilianstrasse 54
80538 München (DE)**

(54) **Public key cryptograph communication method**

(57)    A public key cryptograph communication technology which can be verified to be secure even when an attacker to the public key cryptograph selects a random function giving random oracle is provided.

A sender side apparatus 100 generates a cipher text so that it is difficult to calculate from the cipher text partial information with regard to an input value (not finite to message) to a random function as random oracle used in generating the cipher text. And the apparatus 100 generates verification data for verifying that the apparatus 100 knows the input value to the random function, as a unit of the cipher text. Then, the apparatus 100 transmits the cipher text to a receiver side apparatus 200. The receiver side apparatus 200 outputs a result of decrypting the cipher text when the verification data included in the received cipher text can be correctly verified.

FIG.5

EP 1 394 981 A2

## EP 1 394 981 A2

### Description

This application is based on Japanese Patent Application Nos. 2002-229114 and 2003-178295 filed in Japan, the contents of which are incorporated hereinto by reference.

Background of the Invention

The present invention relates to a cryptograph communication technology. Particularly, the invention relates to a cryptograph communication technology using a public key cryptograph non-malleabity (indistinguishabilty) of which can be verified against intensified adaptive chosen-ciphertext attack. Further, the invention relates to a cryptograph communication technology using a public key cryptograph security of which can be verified even when an attacker of a cryptograph sets an unfairness trick for a random oracle (function).

At present, as described in Relations Among Notions of Security for Public-Key Encryption Schemes, Proc. of Crypto' 98, LNCS1462, Springer-Verlag, pp.26-45 (1998), M. Bellare, A. Desai, D. Pointcheval and P. Rogaway (hereinafter, referred to as nonpatnet document 1) , a public key cryptograph is regarded to be most secure when the public key cryptograph is non-malleable against adaptive chosen-ciphertext attack (IND (indistinguishability)-CCA2 (Adaptive Chosen Ciphertext Attack)).

Public key cryptograph systems security of which can be verified in the meaning of IND-CCA2 is classified grossly in two. One of the system verifies security on a computer model on the premise of random oracle (random value is correctly outputted to input value). Although the system needs an unrealistic assumption of random oracle, the system can realize a public key cryptograph method excellent in practical performance. The other system verifies security on a standard computational model. Although the latter system is inferior to the former system in view of efficiency, the latter system is provided with an advantage of being capable of verifying security on an actual system.

As a practical encryption method which can be verified to be IND-CCA2 on a computer model on the premise of random oracle, an encryption method described in Random Oracles are Practical - A Paradigm for Designing Efficient Protocol, First ACM Conference on Computer and Communications Security, pp.62-73 (1993), M. Bellare and P. Rogaway (hereinafter, referred to as nonpatnet document 2), Optimal Asymmetric Encryption How to Encrypt: with RSA, Proc. of Enrocrypt'94, LNCS950, Springer-Verlag, pp.92-111 (1994), M. Bellare and P. Rogaway (hereinafter, referred to as nonpatnet document 3), and OAEP Reconsidered Available on the e-print library (2000/060), November 2000, V. Shoup (hereinafter, referred to as nonpatnet document 4), or the like is known.

Meanwhile, as a practical encryption method which can be verified to be IND-CCA2 on a standard computer model, an encryption method described in A practical Public Key Cryptosystem Provably Secure against Adaptive Chosen Ciphertext Attack, Proc. of Crypto98, LNCS1462, Springer-Verlag, pp.13-25 (1998), R. Cramer and V. Shoup (hereinafter, referred to as nonpatnet document 5) is known.

Summary of the Invention

Now, it is an object of the invention to provide a public key cryptograph communication technology which can be verified to be IND-CCA2 on a random oracle model. According to the definitionof IND-CCA2, a random oracle needs to be given fairly. However, in the real world, it is difficult to show that a random function (for example, hash function) giving a random oracle is fair.

For example, an attacker to a public key cryptograph may generate a hash function with a trapdoor and make a user of an existing system utilize the function to thereby break the system. Further, generally, the publicly cryptograph and the hash function are designed separately from each other and therefore, the security of the public key cryptograph may be controlled by the hash function.

The fact will simply be explained as follows.

The above-described nonpatent document 2 describes a public key cryptograph method in which a cipher text (u, v, w) thereof is given by the following equation 35 with regard to a message x.

$$u = f(r), \qquad v = G(r) \oplus x, \qquad w = H(r\|x) \qquad\qquad \text{Eq.35}$$

Further, in Equation 35, notation f designates a one-way permutation having a trapdoor which is made public and notations G, H designate hash functions. The nonpatent document 2 shows that the public key cryptograph method is IND-CCA2 when the hash functions G, H are random oracles.

Now, assume that an attacker to the public key cryptograph who is the designer of the hash function G generates the hash function G to be G=G'·f with regard to a hash function G' (incidentally, (f·g) (m) = f(g(m))). Here, caution is required to that when G' is a random oracle, G also becomes a random oracle.

The attacker can calculate a message m by the following equation since 36 G (r) = (G'·f) (r) =G' (f(r)) = G' (u) .

$$m = v \oplus G'(u) \qquad\qquad \text{Eq.36}$$

In this way, according to the conventional definition of IND-CCA2, there is a case in which even with the public key cryptograph which is secure, when a random function for giving a random oracle is selected by an attacker, a message can be obtained unfairly.

The present invention has been carried out in view of the above-described situation and it is an object thereof to provide a cryptograph communication technology using a public key cryptograph which can be verified to be secure even when an attacker to the public key cryptograph selects a random function giving a random oracle.

Specifically, even when an attacker executes an adaptive chosen-ciphertext attack by selecting a random function giving a random oracle, partial information with regard to a message is made to be unable to calculate.

In order to resolve the above-described problem, according to a public key cryptograph communication method of the present invention, a sender side apparatus generates a cipher text of a message by using a random function and a public key of a receiver and transmits the cipher text to a receiver side apparatus. Meanwhile, the receiver side apparatus decrypts the cipher text received from the sender side apparatus by using the random function and a secret key paired with the public key.

Further, the sender side apparatus generates the cipher text such that partial information with regard to an input value to the random function from the cipher text is non-malleable, that is, the partial information with regard to the input value (not finite to the message) to the random function as a random oracle used in generating the cipher text is difficult to calculate from the cipher text. Explaining by an example of a public key cryptograph shown in Equation 35, Equation 36, the cipher text is formed such that partial information f(r) of an input value r to a hash function G is difficult to calculate from the cipher text.

Thereby, even when an attacker to the public key cryptograph can freely select a random function, the partial information with regard to the message cannot be calculated from the cipher text. Explaining by an example of a public key cryptograph shown in Equation 35, Equation 36, G(r) cannot be provided from a hash function G'. Therefore, attack to the public key cryptograph by the attacker can be made ineffective.

Further, according to the present invention, the sender side apparatus may generate a verification data for verifying the sender side apparatus knows that the input value to the random function as a unit of the cipher text. In this case, the receiver side apparatus confirms fairness of the verification data included in the cipher text received from the sender side apparatus and outputs a result of decrypting the cipher text only when the fairness is confirmed.

Thereby, only when it is verified the sender side apparatus knows that the input value to the random function, the result of decrypting the cipher text is outputted and therefore, an attacker to the public key cryptograph who does not know the input value of the random function cannot obtain information with regard to a decrypted result from decryption oracle. Therefore, there can be realized public key cryptograph communication which is secure even when the attacker to the public key cryptograph selects a random function giving a random oracle.

Specifically, for example, a secret key of a receiver is constituted by the following equation 37.

$$\bullet\, x \in \mathbb{Z}_q \quad \cdots \text{Eq.37}$$

A public key paired with the secret key is constituted by the following equation 38.

- $g \in G$
- $h = g^x$
- $H_1 : \{0,1\}^{k_1} \longrightarrow \mathbb{Z}_q$   Random function,
- $H_2 : \{0,1\}^{k_2} \longrightarrow \mathbb{Z}_q$   Random function
- $H_3 : \{0,1\}^{k_1+k_2} \longrightarrow \{0,1\}^{k_3}$   Random function
- $(E, D)$ : Common key decryption algorism

$$\cdots \text{Eq.38}$$

Incidentally, notation G designates a finite abelian group and there is a one-to-one correspondence between an element of G and an element of $\{0,1\}^k$. Further, n may be equal to or larger than or less than $k_1+k_2$.

In this case, the sender side apparatus selects random numbers $r_1' \in \{0,1\}^{k1}$ and $r_2' \in \{0,1\}^{k2}$ for a message $m \in \{0,1\}^n$, and calculates the following equation 39.

$$u = g^{H_1(r_1)H_2(r_2)},$$

$$v = (r_1 \| r_2)h^{H_1(r_1)H_2(r_2)},$$

$$w = E_K(m) \qquad (k = H_3(r_1 \| r_2)) \qquad \text{Eq.39}$$

Incidentally, notation $E_k(m)$ signifies a result of encrypting the message text m by using a common key encryption algorism E with a·key K. A result (u, v, w) thereof is the cipher text of the message m.

Meanwhile, the receiver side apparatus calculates $(r_1', r_2')$ specified the following equation 40 by using the secret key.

$$r_1' \| r_2' = v/u^x, \qquad \text{Eq.40}$$

Incidentally, $r_1' \in \{0,1\}^{k1}$, $r_2' \in \{0,1\}^{k2}$ and bit lengths of $(r_1', r_2')$ are known. Then, confirms fairness of verification data by confirming establishment of the following equation 41.

$$u = g^{H_1(r_1')H_2(r_2')},$$

$$v = (r_1' \| r_2')h^{H_1(r_1')H_2(r_2')}, \qquad \text{Eq.41}$$

And only when the confirmation is succeeded, calculates m' by the following equation 42.

$$m' = D_K'(w) \qquad (k' = H_3(r_1' \| r_2')) \qquad \text{Eq.42}$$

Incidentally, notation $D_K'(w)$ signifies a result of decrypting the cipher text w by using the common encryption algorism D with a key K'. Then, outputs as the message of the cipher text (u, v, w).

Further, according to the present invention, the sender side apparatus may select the input value to the random function uniformly from a sufficiently large set prior to generating the cipher text.

Thereby, an attacker to the public key cryptograph cannot obtain information with regard to a decryption result from decryption oracle since it is further difficult to know the input value to the random function. Therefore, there can be realized the public key cryptograph communication which is secure even when the attacker to the public key cryptograph selects a random function giving random oracle.

Specifically, for example, the secret key of the receiver is constituted by the following equation 43.

$$\bullet \, s \in \mathbb{Z}_q \qquad \cdots \mathrm{Eq}.43$$

The public key paired with the secret key is constituted by the following equation 44.

$$\bullet \, g \in G$$

$$\bullet \, h = g^s$$

$$\bullet \, H_1 : \{0,1\}^{k_0+k_1} \longrightarrow \mathbb{Z}_q \quad \text{Random function},$$

$$\bullet \, H_2 : \{0,1\}^{k_0+k_2} \longrightarrow \mathbb{Z}_q \quad \text{Random function}$$

$$\cdots \mathrm{Eq}.44$$

Incidentally, notation G designates a finite abelian group and there is a one-to-one correspondence regarding an element of $\{0,1\}^k$ as an element of G.

In this case, the sender side apparatus selects random numbers $r_1 \in \{0,1\}^{k1}$ and $r_2 \in \{0,1\}^{k2}$ for the message $m \in (0,1)^{k0}$ and calculates the following equation 45.

$$u = g^{H_1(m\|r_1)H_2(m\|r_2)},$$

$$v = (m\|r_1\|r_2)h^{H_1(m\|r_1)H_2(m\|r_2)}, \qquad \mathrm{Eq}.45$$

A result (u, v) thereof is the cipher text of the message m.

Meanwhile, the receiver side apparatus calculates (m', $r_1$', $r_2$') specified the following equation 46 by using the secret key,

$$m'\|r_1'\|r_2' = v/u^s, \qquad \mathrm{Eq}.46$$

Incidentally, m' $\in \{0,1\}^{k0}$, $r_1$' $\in \{0,1\}^{k1}$, $r_2$' $\in \{0,1\}^{k2}$ and bit lengths of m', $r_1$', $r_2$' are known. Then, confirms establishment of the following equation 47.

$$u = g^{H_1(m'\|r_1')H_2(m'\|r_2')} \qquad \mathrm{Eq}.47$$

Notation m' is the message of the cipher text (u, v) only when the confirmation is succeeded.

Further, according to the present invention, the message constituting an object of encryption corresponds not only with a character row but also with all of digital data including image, sound, and a common key used for encrypting transmission data.

Brief Description of the Drawings

Fig. 1 is an schematic view of a public key cryptograph communication system common to respective embodiments of the invention.

Fig. 2 is an schematic view of the sender side apparatus 100 shown in Fig. 1.

Fig. 3 is an schematic view of the receiver side apparatus 200 shown in Fig. 1.

Fig. 4 is a view showing an example of hardware constructions of the sender side apparatus 100 and the receiver side apparatus 200.

Fig. 5 is a view for explaining an operational procedure of the first embodiment according to the invention.

Fig. 6 is a view for explaining an operational procedure of the second embodiment according to the invention.

Fig. 7 is a view for explaining an operational procedure of the third embodiment according to the invention.

Fig. 8 is a view for explaining an operational procedure of the fourth embodiment according to the invention.

Fig. 9 is a view for explaining an operational procedure of the fifth embodiment according to the invention.

Fig. 10 is a view for explaining an operational procedure of the sixth embodiment according to the invention.

Fig. 11 is a view for explaining an operational procedure of the seventh embodiment according to the invention.

Fig. 12 is a view for explaining an operational procedure of the eighth embodiment according to the invention.

Fig. 13 is a view for explaining an operational procedure of the ninth embodiment according to the invention.

Fig. 14 is a view for explaining an operational procedure of the tenth embodiment according to the invention.

Detailed description of the preferred embodiments

Embodiments of the present invention will be explained as follows.

First, an explanation will be given of a constitution of a public key cryptograph communication system common to the following respective embodiments.

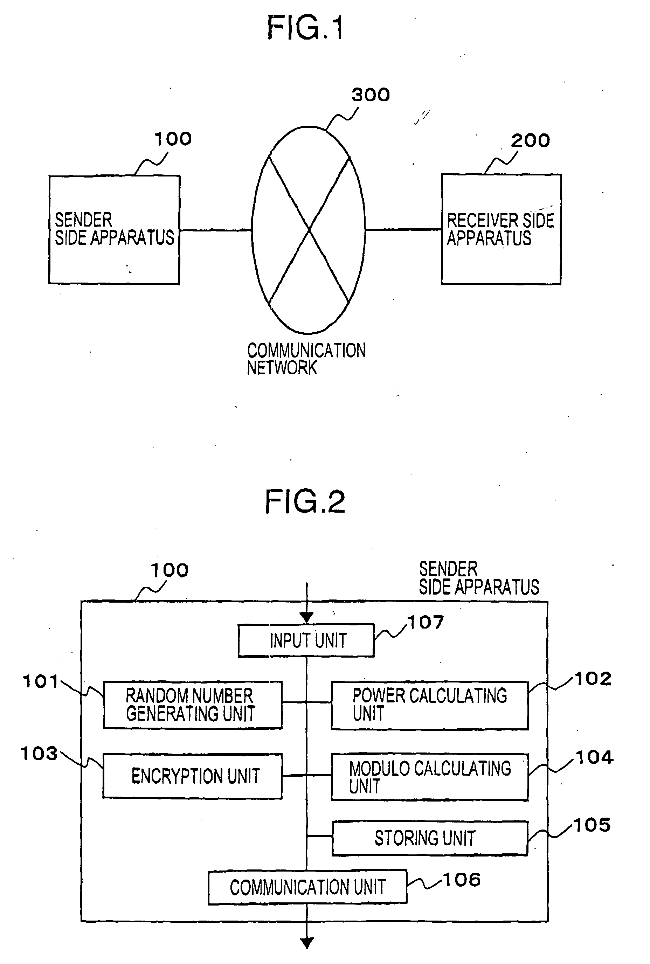

Fig. 1 is a schematic view of a public key cryptograph communication system common to the respective embodiments of the invention. As shown in Fig. 1, the public key cryptograph communication system has a constitution in which a sender side apparatus 100 generating a cipher text of a message by carrying out an encryption processing and a receiver side apparatus 200 recovering the message by carrying out a decryption processing are connected via a communication network 300.

Fig. 2 is a schematic view of the sender side apparatus 100 shown in Fig. 1 . As shown in Fig. 2, the sender side apparatus 100 includes an input unit 107 which receives input of various kinds of information including a message as an object of encryption, a random number generating unit 101, a power calculating unit 102, an encryption unit 103, a modulo calculating unit 104, a storing unit 105 and a communication unit 106 which communicates with the receiver side apparatus 200 via the communication network 300.

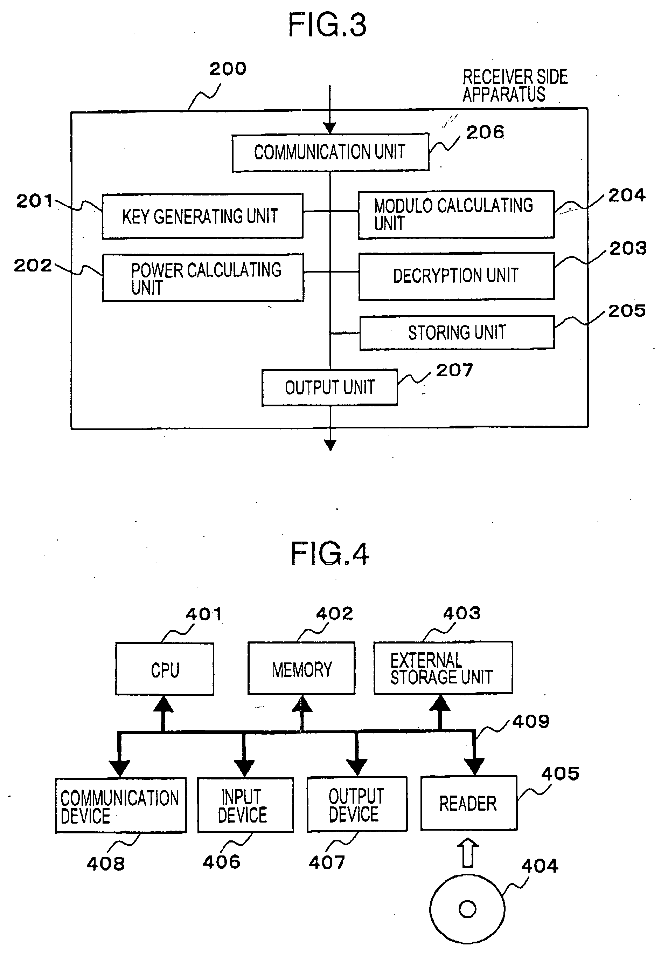

Fig. 3 is a schematic view of the receiver side apparatus 200 shown in Fig. 1. As shown in fig. 3, the receiver side apparatus 200 includes a communication unit 206 which communicates with the sender side apparatus 100 via the communication network 300, a key generating unit 201, a power calculating unit 202, a decryption unit 203, a modulo calculating unit 204, a storing unit 205 and an output unit 207 which outputs various kinds of information including a result of decryption.

As shown by Fig. 4, in a general computer system having CPU401, a memory 402, an external storage unit 403 such as HDD or the like, a reader 405 for reading information from a portable storage medium 404 such as CD-ROM, DVD-ROM or the like, an input device 406 of a keyboard or a mouse, an output. device 407 such as a display or the like and a communication device 408 which communicates with other party apparatus via the communication network 300, the sender side apparatus 100 and the receiver side apparatus 200 having the above-described constructions can be realized -by executing predetermined programs loaded on the memory 402 by CPU 401. In this case, the memory 402 and/or the external storage unit 403 are utilized by the storing units 105 and 205.

The predetermined programs may be executed by CPU401 by being downloaded to the external storage unit 403 from the storage medium 404 via the reader 405 or from the communication network 300 via the communication device 408 and loaded to the memory 402. Further, the predetermined programs may be executed by CPU 401 by being directly loaded to the memory 402 from the storage medium 404 via the reader 405 or from the communication network 300 via the communication device 408.

First Embodiment

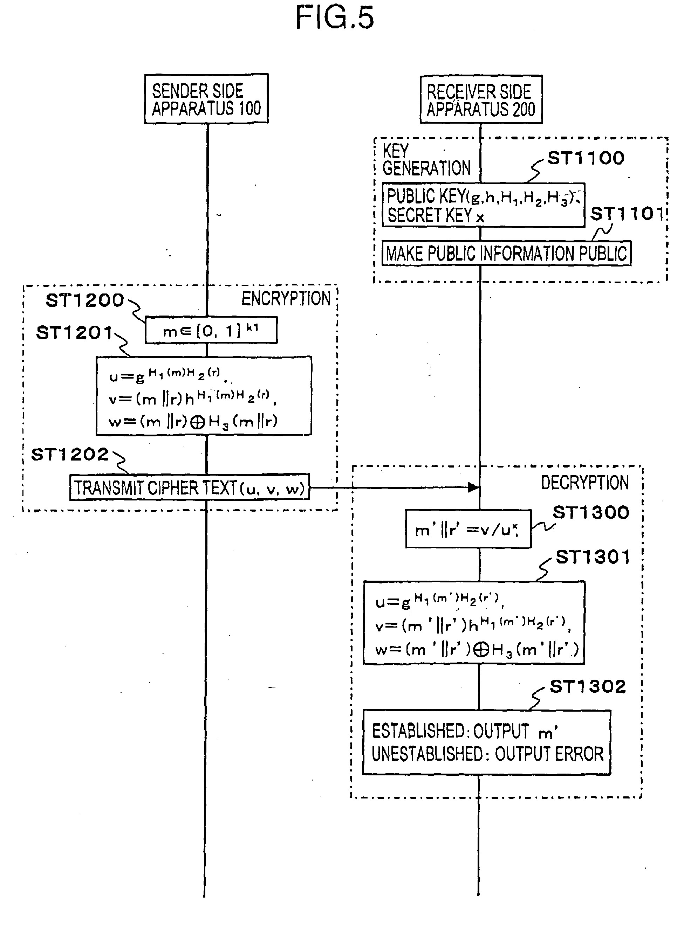

Next, an explanation will be given of a first embodiment of the present invention by taking an example of a case that a message m as transmission data is transmitted from a sender A to a receiver B by cryptograph communication. Fig. 5 is a view for explaining an operational procedure of the first embodiment according to the present invention.

1. Key generating processing

At the receiver side apparatus 200, the key generating unit 201 generates a secret: key x of the receiver B and a public key (g, h, $H_1$, $H_2$, $H_3$) of the receiver B respective by equation 48 and equation 49, in accordance with an instruction from the receiver B (an operator of the receiver side apparatus 200) . Then the key generating unit 201 stores the information thus generated to the storing unit 205 (ST1100).

$$\bullet\ x \in \mathbb{Z}_q \quad \cdots \mathrm{Eq.48}$$

$$\bullet\ g \in G$$

$$\bullet\ h = g^x$$

$$\bullet\ H_1 : \{0,1\}^{k_1} \longrightarrow \mathbb{Z}_q \quad \text{Random function},$$

$$\bullet\ H_2 : \{0,1\}^{k_2} \longrightarrow \mathbb{Z}_q \quad \text{Random function}$$

$$\bullet\ H_3 : \{0,1\}^{k_1+k_2} \longrightarrow \{0,1\}^{k_3} \quad \text{Random function}$$

$$\cdots \mathrm{Eq.49}$$

Here, notation G designates a finite abelian group and there is a one-to-one correspondence between elements of G and elements of $\{0, 1\}^k$. Further, $k_3$ may be equal to or larger or less than $k_1+k_2$ .

Next, the receiver B informs public information including information (g, h) generated by the key generating unit 201 of the receiver side apparatus 200 to the sender A (an operator of the sender side apparatus 100) (ST1101). For example, at the receiver side apparatus 200, the key generating unit 201 transmits the public information to the sender side apparatus 100 via the communication unit 206 in accordance with an instruction from the receiver B. Or, the receiver B publishes the public information by a well-known method, for example, registering to a third party (a public information control organization) or the like. The public information is stored in the storing unit 105 of the sender side apparatus 100. Further, the random functions $H_1$ - $H_3$ included in the public key may previously be set to the sender side apparatus 100 and the receiver side apparatus 200. Or, the random functions $H_1$ - $H_3$ separated from the public key, may be put in a public domain.

2. Encryption processing

At the sender side apparatus 100, the input unit 107 receives input of a message m(m$\in \{0,1\}^{k1}$) from the sender A (ST1200). By receiving the input, the random generating unit 101 selects a random number r$\in \{0,1\}^{k2}$ for the message m. Then, the encryption unit 103 calculates the following equation 50 with the power calculating unit 102 by using the random number r and the public key (g, h, $H_1$, $H_2$, $H_3$) of the receiver B previously stored in the storing unit 105 (ST1201).

$$u = g^{H_1(m)H_2(r)},$$

$$v = (m\|r)h^{H_1(m)H_2(r)},$$

$$w = (m\|r) \oplus H_3(m\|r) \qquad \qquad \mathrm{Eq.60}$$

Next, the encryption unit 103 transmits a calculation result (u, v, w) of the equation 50 as a cipher text of the message m to the receiver side apparatus 200 via the communication network 300 (ST1202).

3. Decryption processing

At the receiver side apparatus 200, the communication unit 206 receives the cipher text (u, v, w) from the sender side apparatus 100 via the communication network 300 and stores the cipher text in the storing unit 205. Now, the decryption unit 203 calculates (m' , r') satisfying the following equation 51 from the cipher text (u, v, w) stored in the storing unit 205 with the power calculating unit 202 by using the secret key x of the receiver B stored in the storing unit 205 in accordance with an instruction from the receiver B (ST1300).

$$m'\|r' = v/u^x,$$ Eq.51

Here, bit lengths of m' and r' are already known.

Next, the decryption unit 203 confirms whether the following equation 52 is established, with the power calculating unit 202 by using a calculation result (m', r') of the equation 51 (ST1301).

$$u = g^{H_1(m')H_2(r')},$$

$$v = (m'\|r')h^{H_1(m')H_2(r')},$$

$$w = (m'\|r') \oplus H_3(m'\|r')$$ Eq.52

Then, the decryption unit 203 outputs a decryption result m' from the output unit 207 only when it is confirmed that the equation 52 is established. Meanwhile, when it is not confirmed that the equation 52 is established, the decryption unit 203 rej ects output of the decryption result m' and outputs, for example, an error message or the like from the output unit 207 instead thereof (ST1302).

The first embodiment of the present invention has been explained.

According to the embodiment, IND-CCA2 can be verified on the premise of a difficulty of Decisional Diffie-Hellman problem on group G (refer to, for example, the nonpatent document 5 with regard to the definition).

That is, in order that an attacker trying to break a public key cryptograph according to the embodiment in the meaning of IND-CCA2 (definition of IND-CCA2 is described in, for example, the nonpatent document 4) acquires information from a decryption oracle, it is necessary to know an original message with respect to the cipher text as a question. However, the attacker cannot acquire new information from the decryption oracle. Further, it can be verified that the embodiment is non-malleable against chosen-plaintext attack (IND-CPA (chosen-Plaintext Attack)) by a method similar to a method described in the nonpatent document 3. Thereby, it can be verified that the public key cryptograph communication of the embodiment is IND-CCA2.

Further, when the random number r is regarded as a message (in this case, the message m is a secret) in the embodiment, IND-CPA can be verified on the premise of the difficulty of the Decisional Diffie-Hellman problem on group G by a method similar to a method described in the nonpatent document 3. That is, it can be verified that partial information with regard to the random number r is not leaked from the cipher text. That is, according to the embodiment, it is difficult to calculate partial information with regard to the message from the cipher text even when the attacker acquires information accompanied by random function from a third (another) random function.

Further, in order to correctly generate data w which is a unit of the cipher text it is necessary to know data m and data r. In other words, only a person knowing an input value to the random function can generate data m. According to the invention, the attacker who cannot correctly generate data w is difficult to acquire new information from the decryption oracle.

From the above-described, secure public key cryptograph communication can be realized even when the attacker to the public key cryptograph selects a random function providing a random oracle.

Second Emhodiment

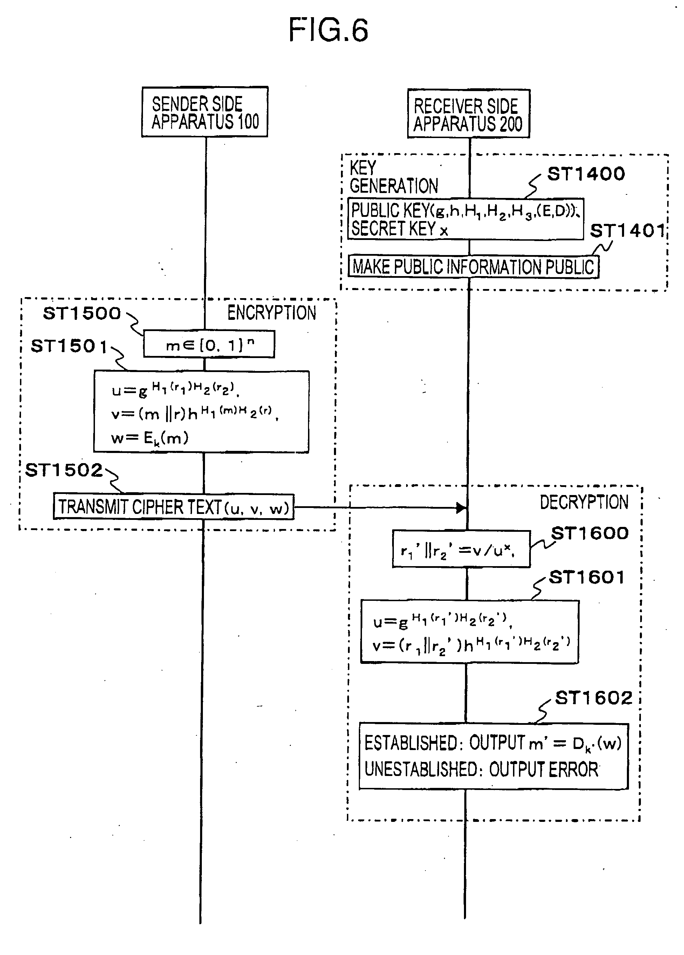

Next, an explanation will be given of a second embodiment of the present invention by taking an example of a case that a message m as transmission data is transmitted from the sender A to the receiver B by cryptograph communication. Fig. 6 is a view for explaining an operational procedure of the second embodiment according to the invention.

1. Key generating processing

At the receiver side apparatus 200, the key generating unit 201 generates the secret key x of the receiver B and a public key (g, h, $H_1$, $H_2$, $H_3$, (E, D) ) of the receivers respectively by the following equation 53 and equation 54, in accordance with an instruction from the receiver B (the operator of the receiver side apparatus 200) . Then, the key generating unit 201 stores the information thus generated to the storing unit 205 (ST1400).

$$\bullet\ x \in \mathbb{Z}_q \quad \cdots \text{Eq.53}$$

$$\bullet\ g \in G$$

$$\bullet\ h = g^x$$

$$\bullet\ H_1 : \{0,1\}^{k_1} \longrightarrow \mathbb{Z}_q \quad \text{Random function,}$$

$$\bullet\ H_2 : \{0,1\}^{k_2} \longrightarrow \mathbb{Z}_q \quad \text{Random function}$$

$$\bullet\ H_3 : \{0,1\}^{k_1+k_2} \longrightarrow \{0,1\}^n \quad \text{Random function}$$

$$\bullet\ (E,D) : \text{Common key decryption algorism}$$

$$\cdots \text{Eq.54}$$

Here, notation G designates the finite abelian group and there is a one-to-one correspondence between elements G and elements of $\{0,1\}^k$. Further, n may be equal to or larger than or less than $k_1+k_2$.

Next, the receiver B informs public information including information (g, h) generated by the key generating unit 201 of the receiver side apparatus 200 to the sender A (the operator of the sender side apparatus 100) (ST1401). For example, at the receiver side apparatus 200, the key generating unit 201 transmits the public information to the sender side apparatus 100 via the communication unit 206 in accordance with an instruction from the receiver B. Or, the receiver B publishes public information by a well-known method, for example, registering to a third party (public information control organization) or the like. The public information is stored in the storing unit 105 of the sender side apparatus 100. The random functions $H_1$ - $H_2$ and the common key cryptograph algorism (E, D) included in the public key may previously be set to the sender side apparatus 100 and the receiver side apparatus 200. Or, the random functions $H_1$ - $H_3$ and the common cryptograph algorism (E, D), separated from the public key, may be put to a public domain.

2. Encryption processing

At the receiver side apparatus 100, the input unit 107 receives input of a message m ($m \in \{0,1\}^n$) from sender A (ST1500 ) . By receiving the input, the random number generating unit 101 selects random numbers $r_1 \in (0,1)^{k1}$ and $r_2 \in (0,1)^{k2}$ for the message m. Then, the encryption unit 103 calculates the following equation 55 with the power calculating unit 102 by using the random number $r_1$, $r_2$ and the public key (g, h, $H_1$, $H_2$, $H_3$, (E, D) ) of the receiver B previously stored in the storing unit 105 (ST1501) .

$$u = g^{H_1(r_1)H_2(r_2)}$$

$$v = (r_1\|r_2)h^{H_1(r_1)H_2(r_2)},$$

$$w = E_K(m) \qquad (k = H_3(r_1\|r_2)) \qquad \text{Eq.55}$$

Here, notation $E_K(m)$ signifies a result of encryption by using the common key encryption algorism E by the key K.

Next, the encryption unit 103 transmits a calculation result (u, v, w) of Equation 55 to the receiver side apparatus 200 via the communication network 300 as a cipher text of the message m (ST1502).

3. Decryption processing

At the receiver side apparatus 200, the communication unit 206 receives the cipher text (u, v, w) from the sender side apparatus 100 via the communication network 300 and stores the cipher text in the storing unit 205. Now, the decryption unit 203 calculates ($r_1'$ , $r_2'$ ) satisfying the following equation 56 from the cipher text (u, v, w) stored in the storing unit 205 with the power calculating unit 202 by using the secret key x of the receiver stored in the storing unit 205 w in accordance with an instruction from the receiver B (ST1600).

$$r_1' \| r_2' = v/u^x, \qquad\qquad Eq.56$$

Here, $r_1' \in \{0,1\}^{k1}$ and $r_2' \in \{0,1\}^{k2}$ and the bit lengths of $r_1'$ and $r_2'$ are already known.

Next, the decryption unit 203 confirms whether the following equation 57 is established, with the power calculating unit 202 by using a calculation result ($r_1'$, $r_2'$) of the equation 56 (ST1601).

$$u = g^{H_1(r_1')H_2(r_3')},$$

$$v = (r_1' \| r_2') h^{H_1(r_1')H_2(r_2')}, \qquad\qquad Eq.57$$

Then, the decryption unit 203 calculates m' by the following equation 58 only when it is confirmed that the equation 57 is established. And the decryption unit 203 outputs m' as a decryption result of the cipher text.

$$m' = D_{K'}(w) \qquad (k' = H_3(r_1' \| r_2')) \qquad\qquad Eq.58$$

Here, notation $D_K$, (w) signifies a result of decrypting the cipher text w by using the common key decryption algorism D with the key K' . Meanwhile, when it is not confirmed that the equation 57 is established, the decryption unit 203 rejects calculation of m' , and outputs for example, an error message or the like from the output unit 207 instead thereof (ST1602) .

The second embodiment of the present invention has been explained.

Also in the embodiment, an effect similar to that of the above-described fist embodiment is achieved.

Third Embodiment

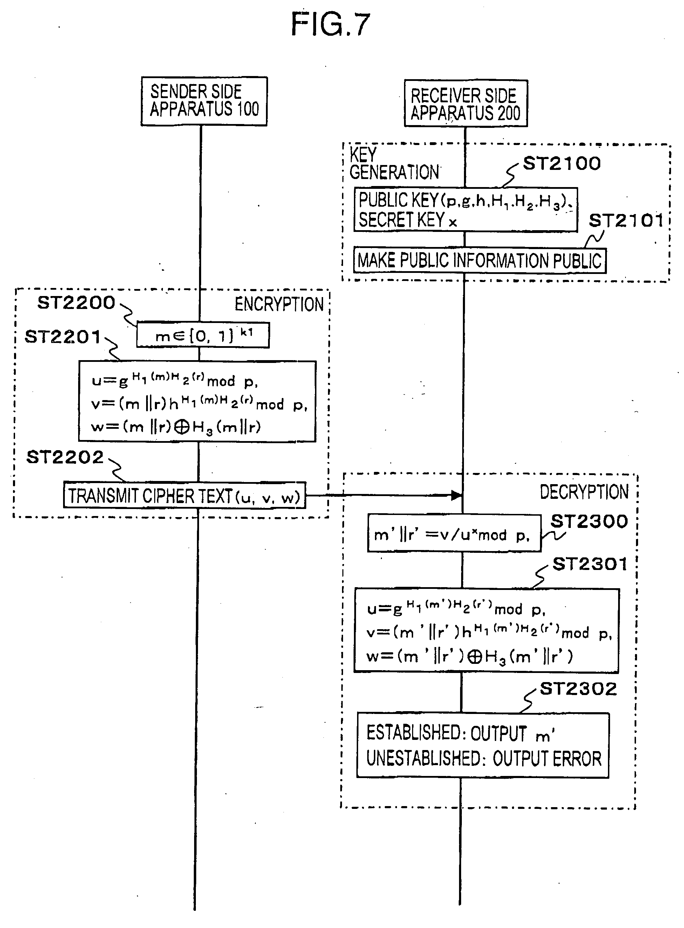

Next, a third embodiment of the present invention will be explained. Fig. 7 is a view for explaining an operational procedure of the third embodiment of the present invention.

1. Key generating processing

At the receiver side apparatus 200, the key generating unit 201 generates the secret key x of the receiver B and a public key (p, g, h, $H_1$, $H_2$, $H_3$) of the receiver B respectively by the following equation 59 and equation 60 in accordance with an instruction from the receiver B. Then the key generating unit 201 stores the information thus generated in the storing unit 205 (ST2100).

$$\bullet\ x \in \mathbb{Z}_q \quad \cdots \mathrm{Eq.59}$$

$$\bullet \ p : \text{Prime number} \quad (q|p-1)$$

$$\bullet \ g \in \mathbb{Z}_p$$

$$\bullet \ h = g^x \bmod p$$

$$\bullet \ H_1 : \{0,1\}^{k_1} \longrightarrow \mathbb{Z}_q \quad \text{Random function},$$

$$\bullet \ H_2 : \{0,1\}^{k_2} \longrightarrow \mathbb{Z}_q \quad \text{Random function}$$

$$\bullet \ H_3 : \{0,1\}^{k_1+k_2} \longrightarrow \{0,1\}^{k_3} \quad \text{Random function}$$

$$\cdots \text{Eq.60}$$

Here, there is a one-to-one correspondence between elements of $\mathbb{Z}_p$ and elements of $\{0, 1\}^k$. And, $k_3$ may be equal to or larger than or less than $k_1+k_2$.

Next, the receiver B informs public information including information (p, g, h) generated by the key generating unit 201 of the receiver side apparatus 200 to the senderA (ST2101) . For example, at the receiver side apparatus 200, the key generating unit 201 transmits the public information to the sender side apparatus 100 via the communication unit 206 in accordance with an instruction from the receiver B. Or, the receiver B publishes the public information by a well-known method, for example, registering to a third party (a public information control organization) or the like. The public information is stored in the storing unit 105 of the sender side apparatus 100. The random functions $H_1$ - $H_3$ included in the public key may previously beset to the sender side apparatus 100 and the receiver side apparatus 200 similar to the above-described first embodiment. Or, the random functions $H_1$ - $H_3$ separated from the public key, may be put in a public domain.

2. Encryption processing

At the sender side apparatus 100, the input unit 107 receives input of a message m(m$\in \{0,1\}^{k_1}$) from the sender A (ST2200). By receiving the input, the random number generating unit 101 selects the random number r$\in \{0,1\}^{k_2}$ for the message m. Then, the encryption unit 103 calculates the following equation 61 with the power calculating unit 102 and the modulo calculating unit 104 by using the random number r and the public key (p, g, h, $H_1$, $H_2$, $H_3$) of the receiver B previously stored in the storing unit 105 (ST2201).

$$u = g^{H_1(m)H_2(r)} \bmod p,$$

$$v = (m\|)h^{H_1(m)H_2(r)} \bmod p,$$

$$w = (m\|r) \oplus H_3(m\|r) \qquad \text{Eq.61}$$

Next, the encryption unit 103 transmits a calculation result (u, v, w) of the equation 61 as a cipher text of the message m to the receiver side apparatus 200 via the communication network 300 (ST2202).

3. Decryption processing

At the receiver side apparatus 200, the communication unit 206 receives the cipher text (u, v, w) from the sender side apparatus 100 via the communication network 300 and stores the cipher text in the storing unit 205. Now, the decryption unit 203 calculates (m', r' ) satisfying the following equation, 62 from the cipher text (u, v, w) stored in the storing unit 205 with the power calculating unit 202 by using the secret key x of the receiver B stored in the storing unit 205 in accordance with an instruction from the receiver B (ST2300).

$$m'\|r' = v/u^x \bmod p, \qquad\qquad \text{Eq.62}$$

Here, bit lengths of m' and r' are already known.

Next, the decryption unit 203 confirms whether the following equation 63 is established, with the power calculating unit 202 and the modulo calculating unit 204 by using a calculation result (m', r' ) of the equation 62 (ST2301) .

$$u = g^{H_1(m')H_2(r')} \bmod p,$$

$$v = (m'\|r')h^{H_1(m')H_2(r')} \bmod p,$$

$$w = (m'\|r') \oplus H_3(m'\|r') \qquad\qquad \text{Eq.63}$$

Then, the decryption unit 203 outputs a decryption result m' from the output unit 207 only when it is confirmed that the equation 63 is established. Meanwhile, when it is not confirmed that the equation 63 is established, the decryption unit 203 rejects, output of the decryption result m' and outputs, for example, an error message or the like from the output unit 207 instead thereof (ST2302).

The third embodiment of the present invention has been explained.

Also according to the embodiment, IND-CCA2 can be verified on the premise of the difficulty of the Decisional Diffie-Hellman problem on group $Z^*_p$ by a method similar to that of the above-described first embodiment.

Further, IND-CPA can be verified on the premise of the difficulty of the Decisional Diffie-Hellman problem on group $Z^*_p$ when the random number r is regarded as a message (in this case, message m is secret) similar to the above-described first embodiment. That is, it can be verified that partial information with regard to the random number r is not-leaked from the cipher text. That is, it is difficult to calculate partial information with regard to the message from the cipher text even when the attacker acquires information accompanied by the random function from a third (another) random function.

Further, similar to the above-described first embodiment, in order to correctly generate data w which is a unit of the cipher text, it is necessary to know data m and data r. In other words, data m can be formed only by a person who knows an input value to the random function. According to the embodiment, an attacker who cannot correctly generate data w is difficult to acquire new information from the decryption oracle.

From the above-described, secure public key cryptograph communication can be realized even when the attacker to the public key cryptograph select a random function providing a random oracle.

Fourth Embodiment

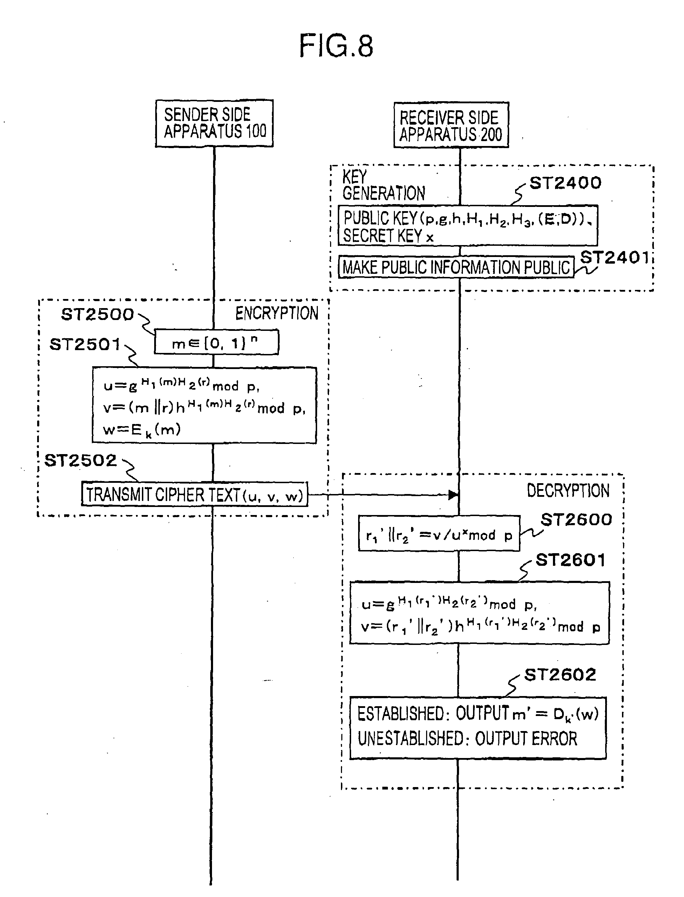

Next, a fourth embodiment of the present invention will be explained. Fig. 8 is a view for explaining an operational procedure of the fourth embodiment of the present invention.

1. Key generating processing

At the receiver side apparatus 200, the key generating unit 201 generates the secret key x of the receiver B and a public key (p, g, h, $H_1$, $H_2$, $H_3$, (E, D)) of the receiver B respectively by the following equation 64 and equation 65 in accordance with an instruction from the receiver B (ST2400) . Then, the key generating unit 201 stores the information thus generated in the storing unit 205 (ST2400).

$$\bullet \ x \in \mathbb{Z}_q \qquad \cdots \text{Eq.64}$$

$$\bullet \ p : \text{Prime number} \quad (q|p-1)$$

$$\bullet \ g \in \mathbb{Z}_p$$

$$\bullet \ h = g^x \bmod p$$

$$\bullet \ H_1 : \{0,1\}^{k_1} \longrightarrow \mathbb{Z}_q \quad \text{Random function},$$

$$\bullet \ H_2 : \{0,1\}^{k_2} \longrightarrow \mathbb{Z}_q \quad \text{Random function}$$

$$\bullet \ H_3 : \{0,1\}^{k_1+k_2} \longrightarrow \{0,1\}^n \quad \text{Random function}$$

$$\bullet \ (E, D) : \text{Common key decryption algorism}$$

$$\cdots \text{Eq.65}$$

Here, there is a one-to-one correspondence between elements of $\mathbb{Z}^*_p$ and elements of $\{0,1\}^k$. And, n may be equal to or larger than or less than $k_1+k_2$.

Next, the receiver B informs public information including information (p, g, h) generated by the key generating unit 201 of the receiver side apparatus 200 to the senderA (ST2401). For example, at the receiver side apparatus 200, the key generating unit 201 transmits the public information to the sender side apparatus 100 via the communication unit 206 in accordance with an instruction from the receiver B. Or, the receiver B publishes public information by a well-known method, for example, registering to a third party (a public information control organization) or the like. The public information is stored in the storing unit 105 of the sender side apparatus 100. The random functions $H_1$ - $H_3$ and the common key cryptograph algorism (E,D) included in the public key may previously be set to the sender side apparatus 100 and the receiver side apparatus 200 similar to the above-described first embodiment. Or, the random functions $H_1$ - $H_3$ and the common key cryptograph algorism (E,D) separated from the public key, may be put in a public domain.

2. Encryption processing

At the receiver side apparatus 100, the input unit 107 receives input of a message m($m \in \{0,1\}^n$) from the sender A (ST2500). By receiving the input, the random number generating unit 101 selects random numbers $r_1 \in \{0,1\}^{k1}$ and $r_2 \in \{0,1\}^{k2}$ for the message m. Then, the encryption unit 103 calculates the following equation 66 with the power calculating unit 102 and the modulo calculating unit 104 by using the random numbers $r_1$ and $r_2$ and the public key (g, h, $H_1$, $H_2$, $H_3$, (E, D)) of the receiver B previously stored in the storing unit 105 (ST2501) .

$$u = g^{H_1(m)H_2(r)} \bmod p,$$

$$v = (m\|r)h^{H_1(m)H_2(r)} \bmod p,$$

$$w = E_K(m) \qquad (k = H_3(r_1\|r_2)) \qquad \text{Eq.66}$$

Here, notation $E_K(m)$ signifies a result of decrypting the message text m by using the common key encryption algorism E with a key K.

Next, the encryption unit 103 transmits a calculation result (u, v, w) of the equation 66 as a cipher text of the message m to the receiver side apparatus 200 via the communication network 300 (ST2502).

3. Decryption processing

At the receiver side apparatus 200, the communication unit 206 receives the cipher text (u, v, w) from the sender side apparatus 100 via the communication network 300 and stores the cipher text in the storing unit 205. Now, the decryption unit 203 calculates ($r_1$', $r_2$') satisfying the following equation 67 from the cipher text (u, v, w) stored in the storing unit 205 with the power calculating unit 202 and the modulo calculating unit 104 by using the secret key x of the receiver stored in the storing unit 205 in accordance with an instruction of the receiver B (ST2600).

$$r_1'\|r_2' = v/u^x \bmod p, \qquad\qquad \text{Eq.67}$$

Here, $r_1'\in \{0,1\}^{k1}$, $r_2' \in \{0,1\}^{k2}$ and bit lengths of $r_1$' and $r_2$' are already known.

Next, the decryption unit 203 confirms whether the following equation 68 is established, with the power calculating unit 202 and the modulo calculating unit 204 by using a calculation result ($r_1$' and $r_2$') of the equation 67 (ST2601).

$$u = g^{H_1(r_1')H_2(r_2')} \bmod p,$$

$$\sim (r_1'\|r_2')h^{H_1(r_1')H_2(r_2')} \bmod p, \qquad\qquad \text{Eq.68}$$

Then, the encryption unit 203 calculates m' by the following equation 69 only when it is confirmed that the equation 68 is established. And the encryption unit 203 outputs m' as a decryption result of the cipher text.

$$m' = D_{K}'(w) \qquad (k' = H_3(r_1'\|r_2')) \qquad\qquad \text{Eq.69}$$

Here, notation $D_{k'}$(w) signifies a result of decrypting the cipher text W by using the common key decryption algorism D with the key K'. Meanwhile, when it is not confirmed that the equation 68 is established, the decryption unit 203 rejects calculation of m' and outputs, for example, an error message or the like is outputted from the output unit 207 instead thereof (ST2602).

The fourth embodiment of the invention has been explained.

Also according to the embodiment, an effect similar to that of the above-described first embodiment is achieved.

Fifth Embodiment

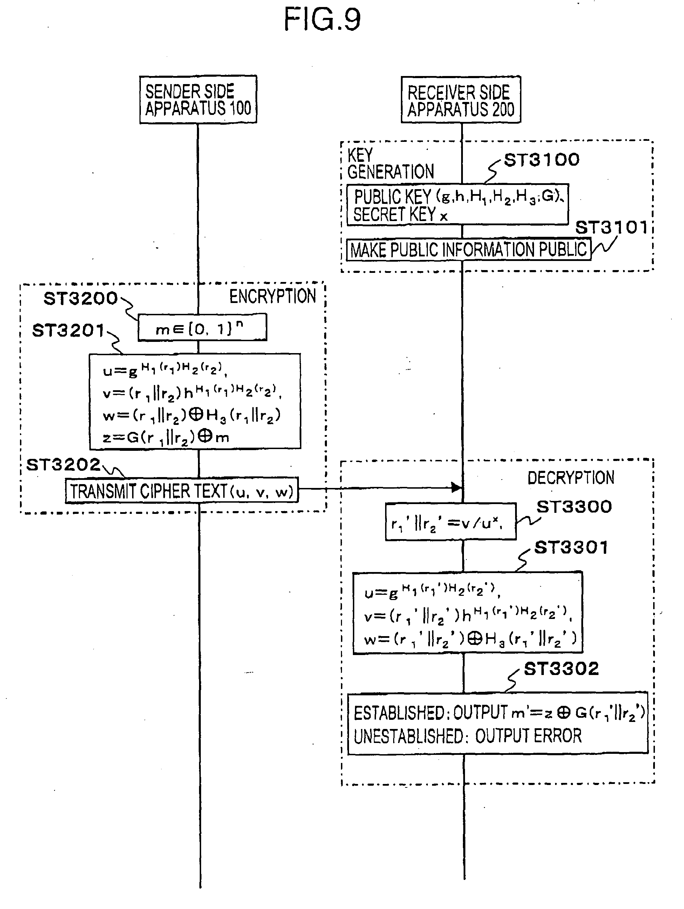

Next, a fifth embodiment of the present invention will be explained. The embodiment is a modified example of the above-described first embodiment and a plain text space (length of message) can be made larger than that of the above-described first embodiment. Fig. 9 is a view for explaining an operational procedure of the fifth embodiment of the present invention.

1. Key generating processing

At the receiver side apparatus 200, the key generating unit 201 generates the secret key x of the receiver B and a public key (g, h, $H_1$, $H_2$, $H_3$, G) of the receiver B respectively by the following equation 70 and equation 71 in accordance with an instruction from the receiver B. Then, the key generating unit 201 stores the information thus generated in the storing unit 205 (ST3100).

$$\bullet\ x \in \mathbb{Z}_q \quad \cdots \text{Eq.70}$$

$$\bullet\ g \in G$$

$$\bullet\ h = g^x$$

$$\bullet\ H_1 : \{0,1\}^{k_1} \longrightarrow \mathbb{Z}_q \quad \text{Random function},$$

$$\bullet\ H_2 : \{0,1\}^{k_2} \longrightarrow \mathbb{Z}_q \quad \text{Random function}$$

$$\bullet\ H_3 : \{0,1\}^{k_1+k_2} \longrightarrow \{0,1\}^{k_3} \quad \text{Random function}$$

$$\bullet\ G : \{0,1\}^{k_1+k_2} \longrightarrow \{0,1\}^{n} \quad \text{Random function}$$

$$\cdots \text{Eq.71}$$

Here, notation G designates a finite abelian group and there is a one-to-one correspondence between elements of G and elements of $\{0,1\}^k$. Further, respectives $k_3$ and n may be equal to or larger than or less than $k_1+k_2$.

Next, the receiver B informs public information including information (g, h) generated by the key generating unit 201 of the receiver side apparatus 200 to the sender A (ST3101). For example, at the receiver side apparatus 200, the key generating unit 201 transmits the public information to the sender side apparatus 100 via the communication unit 206 in accordance with an instruction from the receiver B. Or, the receiver B publishes public information by a well-known method, for example, registering to a third party (a public information control organization) or the like. The public information is stored in the storing unit 105 of the sender side apparatus 100. The random functions $H_1$ - $H_3$, G included in the public key may previously be set to the sender side apparatus 100 and the receiver side apparatus 200 similar to the above-described first embodiment. Or, the random functions $H_1$ - $H_3$, G separated from the public key may be put in a public domain.

2. Encryption processing

At the sender side apparatus 100, the input unit 107 receives input of a message m(m$\in \{0,1\}^n$) from the sender A (ST3200). Byreceiving theinput,the random number generating unit 101 selects random numbers $r_1 \in \{0,1\}^{k1}$ and $r_2 \in \{0,1\}^{k2}$ for the message m. Then, the encryption unit 103 calculates the following equation 72 with the power calculating unit 102 and the modulo calculating unit 104 by using the random number $r_1$, $r_2$ and the public key (g, h, $H_1$, $H_2$, $H_3$, G) of the receiver B previously stored in the storing unit 105 (ST3201).

$$u = g^{H_1(r_1)H_2(r_2)},$$

$$v = (r_1 \| r_2)h^{H_1(r_1)H_2(r_2)},$$

$$w = (r_1 \| r_2) \oplus H_3(r_1 \| r_2),$$

$$z = G(r_1 \| r_2) \oplus m \qquad\qquad \text{Eq.72}$$

Next, the encryption. unit 103 transmits a calculation result (u, v, w, z) of the equation 72 as a cipher text of the message m to the receiver side apparatus 200 via the communication network 300 (ST3202).

3. Decryption processing

At the receiver side apparatus 200, the communication unit 206 receives the cipher text (u, v, w, z) from the sender side apparatus 100 via the communication network 300 and stores the cipher text in the storing unit 205. Now, the decryption unit 203 calculates ($r_1'$, $r_2'$) satisfying the following equation 73 from the cipher text (u, v, w, z) stored in the storing unit 205 with the power calculating unit 202 by using the secret key x of the receiver B stored in the storing unit 205 in accordance with an instruction from the receiver B (ST3300).

$$r_1' \| r_2' = v/u^x, \qquad \text{Eq.73}$$

Here, bit lengths of $r_1'$ and $r_2'$ are already known.

Next, the decryption unit 203 confirms whether the following equation 74 is established, with the power calculating unit 202 by using a calculation result ($r_1'$, $r_2'$) of the equation 73 (ST3301).

$$u = g^{H_1(r_1')H_2(r_2')},$$

$$v = (r_1' \| r_2') h^{H_1(r_1')H_2(r_2')},$$

$$w = (r_1' \| r_2') \oplus H_3(r_1' \| r_2') \qquad \text{Eq.74}$$

Then, when it is not confirmed that the equation 74 is established, the decryption unit 203 rejects output of a decryption result and outputs, for example, an error-message or the like from the output unit 207. Meanwhile, when it is not confirmed that the equation 74 is established, the decryption unit 203 calculates the following equation 75 by using the secret key x of the receiver stored in the storing unit 205, the cipher text (u, v, w, z) stored in the storing unit 205 and the calculation result ($r_1'$, $r_2'$) of the equation 73.

$$m' = Z \oplus G\,(r_1' \| r_2') \qquad \text{Eq.75}$$

The decryption unit 203 outputs the calculation result m' of the equation 75 as the message of the cipher text (u, v, w, z)(ST3302).

The fifth embodiment of the present invention has been explained.

The embodiment achieves an effect similar to that of the above-described first embodiment. In addition thereto, according to the embodiment, the length of message (bit length) n can arbitrary be selected. Therefore, a message longer than that of the above-described first embodiment can be encrypted. As an object of utilizing the public key cryptograph, the public key cryptograph may be utilized in delivery of a data encrypted key of a common key cryptograph. However, not only the data encrypted key but also added information of user ID information or the like are frequently a subject for encryption utilizing the public key cryptograph- In such a case, the embodiment is effective.

Sixth Embodiment

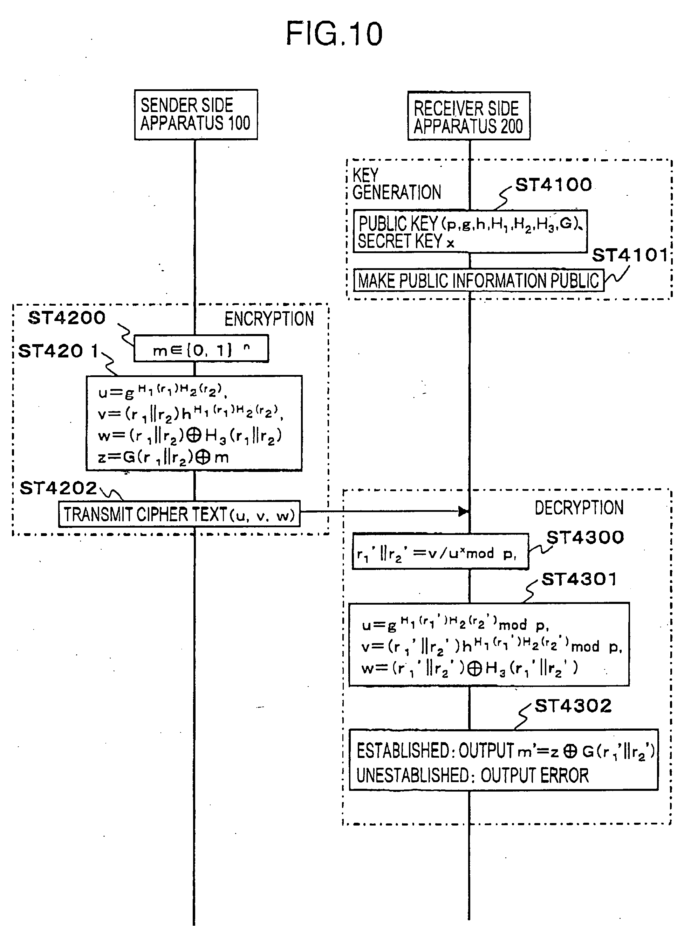

Next, a sixth embodiment of the present invention will be explained. According to the embodiment, in the above-described fifth embodiment, the finite abelian group G is given as a multiplication group determined from a field. Fig. 10 is a view for explaining an operational procedure of the sixth embodiment according to the embodiment.

1. Key generating processing

At the receiver side apparatus 200, the key generat unit 201 generates a secret key x of the receiver B and a public key (p, g, h, $H_1$, $H_2$, $H_3$, G) respectively by the following equation 76 and equation 77 in accordance with an instruction from the receiver B. Then, the key generating unit 201 stores information thus generated in the storing unit 205 (ST4100).

$$\bullet \; x \in \mathbb{Z}_q \quad \cdots \text{Eq.76}$$

$$\bullet\, p: \text{Prime number} \quad (q|p-1)$$

$$\bullet\, g \in \mathbb{Z}_p$$

$$\bullet\, h = g^x \bmod p$$

$$\bullet\, H_1: \{0,1\}^{k_1} \longrightarrow \mathbb{Z}_q \quad \text{Random function},$$

$$\bullet\, H_2: \{0,1\}^{k_2} \longrightarrow \mathbb{Z}_q \quad \text{Random function},$$

$$\bullet\, H_3: \{0,1\}^{k_1+k_2} \longrightarrow \{0,1\}^{k_3} \quad \text{Random function}$$

$$\bullet\, G: \{0,1\}^{k_1+k_2} \longrightarrow \{0,1\}^n \quad \text{Random function},$$

$$\cdots \text{Eq.77}$$

Here, there is a one-to-one correspondence between elements of Z*p and elements of $\{0,1\}^k$. Further, each of $k_3$ and n may be equal to or larger than or less than $k_1+k_2$.

Next, the receiver B informs public information including information (p, g, h) generated by the key generating unit 201 of the receiver side apparatus 200 to the sender A (ST4101) . For example, at the receiver side apparatus 200, the key generating unit 201 transmits public information to the sender side apparatus 100 via the communication unit 206 in accordance with an instruction from the receiver B. Or, the receiver B publishes public information by a well-known method, for example, registering to a third party (a public information control organization) or the like. The public information is stored in the storing unit 105 of the sender side apparatus 100. The random functions $H_1$ - $H_2$, G included in the public key may previously be set to the sender side apparatus 100 and the receiver side apparatus 200 similar to the above-described first embodiment. Or, the random functions $H_1$ - $H_3$, G separated from the public key, may be put in a public domain.

2. Encryption processing

At the sender side apparatus 100, the input unit 107 receives input of a message m(m$\in \{0,1\}^n$) from the sender A (ST4200) . By receiving the input, the random generating unit 101 selects random numbers $r_1 \in \{0,1\}^{k1}$ and $r_2 \in \{0,1\}^{k2}$ for the message m. Then, the encryption unit 103 calculates the equation 78 with the power calculating unit 102 and the modulo calculating unit 104 by using the random numbers $r_1$ and $r_2$ and the public key (p, g, h, $H_1$, $H_2$, $H_3$, G) of the receiver B previously stored in the storing unit 105 (ST4201).

$$u = g^{H_1(r_1)H_2(r_2)} \bmod p,$$

$$v = (r_1 \| r_2) h^{H_1(r_1)H_2(r_2)} \bmod p,$$

$$w = (r_1 \| r_2) \oplus H_3(r_1 \| r_2),$$

$$z = G(r_1 \| r_2) \oplus m \qquad \text{Eq.78}$$

Next, the encryption unit 103 transmits a calculation result (u, v, w, z) of the equation 78 as a cipher text of the message m to the receiver side apparatus 200 via the communication network 300 (ST4202).

3. Decryption processing

At the receiver side apparatus 200, the communication unit 206 receives the cipher text (u, v, w, z) from the sender side apparatus 100 via the communication network 300 and stores the cipher text in the storing unit 205. Now, the decryption unit 203 calculates ($r_1$, $r_2$' ) satisfying the following equation 79 from the cipher text (u, v, w, z) stored in the storing unit 205 with the power calculating unit 202 and the modulo calculating unit 204 by using the secret key x of the receiver B storedin the storing unit 205 in accordance with an instruction from the receiver B (ST9300).

$$r_1'\|r_2' = v/u^x \bmod p, \qquad\qquad \text{Eq.79}$$

Here, bit lengths of $r_1'$, $r_2'$ are already known.

Next, the decryption unit 203 confirms whether the following equation 80 is established, with the power calculating unit 202 and the modulo calculating unit 204 by using a calculation result ($r_1'$, $r_2'$) of the equation 79 (ST4301) .

[Equation 80]

$$u = g^{H_1(r_1')H_2(r_2')} \bmod p,$$

$$v = (r_1'\|r_2')h^{H_1(r_1')H_2(r_2')} \bmod p,$$

$$w = (r_1'\|r_2') \oplus H_3(r_1'\|r_2'), \qquad\qquad \text{Eq.80}$$

Then, when it is not confirmed that the equation 80 is established, the decryption unit 203 rejects output of a decryption result and outputs, for example, an error message or the like from the output unit 207. Meanwhile, when it is confirmed that the equation 80 is established, the decryption unit 203 calculates the following equation 81 by using the secret key x of the receiver B stored in the storing unit 205, the cipher text (u, v, w, z) stored in the storing unit 205 and the calculation result ($r_1'$, $r_2'$) of the equation 79.

$$m' = z \oplus G (r_1'\|r_2') \qquad\qquad \text{Eq.81}$$

The decryption unit 203 outputs a calculation result m' of the equation 81 as a message of the cipher text (u, v, w, z) (ST4302) .

The sixth embodiment of the present invention has been explained.

The embodiment achieves an effect similar to that of the above-described third embodiment. In addition thereto, according to the embodiment, a length (bit length) n of the message can arbitrarily be selected.Therefore, a message longer than that of the above-described third embodiment can be encrypted. As an object of utilizing the public key cryptograph, the public key cryptograph may be utilized in delivering a data encrypted key of a common key cryptograph. However, not only the data encrypted key but also added information of user ID information or the like are frequently a subject for encryption utilizing the public key cryptograph. In such a case, the embodiment is effective.

Seventh Embodiment

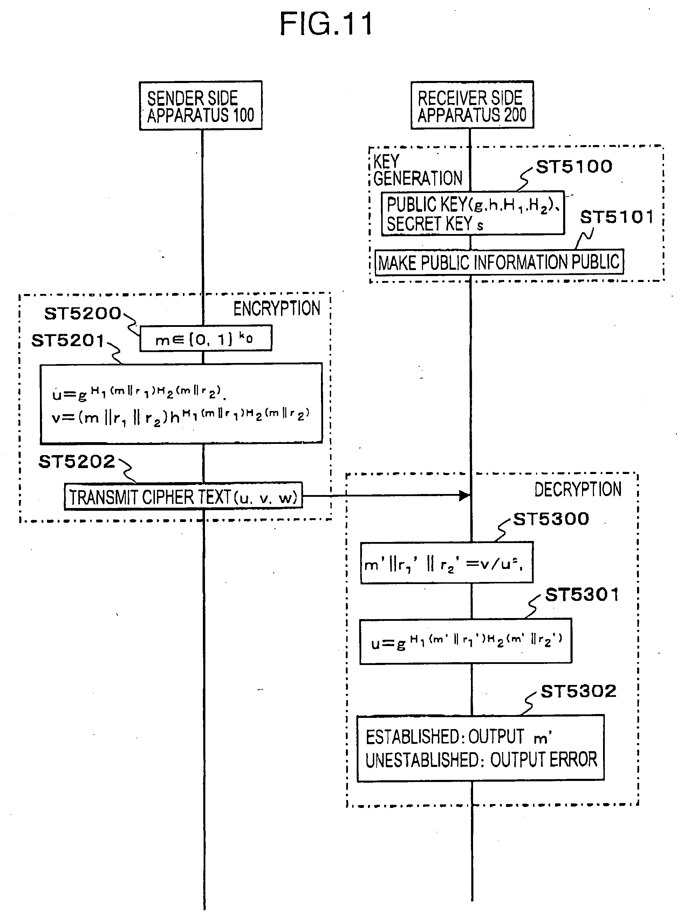

Next, a seventh embodiment of the present invention will be explained by taking an example of a case that the message m as transmission data is transmitted from the sender A to the receiver B by cryptograph communication. Fig. 11 is a view for explaining an operational procedure of the seventh embodiment according to the invention.

1. Key generating processing

At the receiver side apparatus 200, the key generating unit 201 generates a secret key s of the receiver B and a public key (g, h, $H_1$, $H_2$) of the receiver B respectively by the following equation 82 and equation 83. Then, the key generating unit 201 stores the information thus generated in the storing unit 205 (ST5100).

$$\bullet\ s \in \mathbb{Z}_q \qquad \cdots \mathrm{Eq.82}$$

$$\bullet\ g \in G$$

$$\bullet\ h = g^s$$

$$\bullet\ H_1 : \{0,1\}^{k_0+k_1} \longrightarrow \mathbb{Z}_q \quad \text{Random function},$$

$$\bullet\ H_2 : \{0,1\}^{k_0+k_2} \longrightarrow \mathbb{Z}_q \quad \text{Random function}$$

$$\cdots \mathrm{Eq.83}$$

Here, notation G designates a finite abelian group and there is a one-to-one correspondence regarding elements of $\{0,1\}^k$ as elements of G.

Next, the receiver B informs public information including the information (g, h) generated by the key generating unit 201 of the receiver side apparatus 200 to the sender A (the operator of sender side apparatus 100) (ST5101). For example, at the receiver side apparatus 200, the key generating unit 201 transmits the public information to the sender side apparatus 100 via the communication unit 206 in accordance with an instruction from the receiver B. Or, the receiver B publishes public information by a well-known method of, for example, registering to a third party (a public information control organization) or the like. The public information is stored in the storing unit 105 of the sender side apparatus 100. The random functions $H_1$, $H_2$ included in the public key may previously be set to the sender side apparatus 100 and the receiver side apparatus 200. Or, the random functions $H_1$, $H_2$, separated from the public key, may be put in a public domain.

2. Encryption processing

At the sender side apparatus 100, the input unit 107 receives input of a message m($m \in \{0,1\}^{k0}$) from the sender A (ST5200). By receiving theinput,the random number generating unit 101 selects random numbers $r_1 \in \{0,1\}^{k1}$ and $r_2 \in \{0,1\}^{k2}$ for the message m. Here, the random numbers $r_1$ and $r_2$ are selected uniformly among a sufficiently large set, so that selected value cannot be predicted from the set. Then, the encryption unit 103 calculates the following equation 84 with the power calculating unit 102 by using the random numbers $r_1$ , $r_2$ and the public key (g, h, $H_1$, $H_2$) of the receiver B previously stored in the storing unit 105 (ST5201).

$$u = g^{H_1(m\|r_1)H_2(m\|r_2)},$$

$$v = (m\|r_1\|r_2)h^{H_1(m\|r_1)H_2(m\|r_2)}, \qquad \text{Eq.84}$$

Next, the encryption unit 103 transmits a calculation result (u, v) of the equation 84 as a cipher text of the message m to the receiver side apparatus 200 via the communication network 300 (STS202).

3. Decryption processing

At the receiver side apparatus 200, the communication unit 206 receives the cipher text (u, v) from the sender side apparatus 100 via the communication network 300 and stores the cipher text in the storing unit 205. Now, the decryption unit 203 calculates (m', $r_1$', $r_2$') satisfying the following equation 85 from the cipher text (u, v) stored in the storing unit 205 with the power calculating unit 202 by using the secret key s of the receiver B stored in the storing unit 205, in accordance with an instruction from the receiver B(ST5300).

$$m'\|r_1'\|r_2' = v/u^s, \qquad \text{Eq.85}$$

Here, m' $\in$ {0, 1}$^{k0}$, $r_1$' $\in$ {0,1}$^{k1}$, $r_2$' $\in$ {0,1}$^{k2}$ and bit lengths of m', $r_1$' and $r_2$' are already known.

Next, the decryption unit 203 confirms whether the following equation 86 is established, with the power calculating unit 202 by using a calculation result (m' , $r_1$' , $r_2$') of the equation 85.

$$u = g^{H_1(m'\|r_1')H_2(m'\|r_2')}$$

Eq86

Then, the decryption unit 203 outputs a decryption result m' from the output unit 207 only when it is confirmed that the equation 86 is established. Meanwhile, when it is not confirmed that the equation 86 is established, the decryption unit 203 rejects output of the decryption result m' and outputs, for example, an error message or the like instead thereof (ST5302).

The seventh embodiment of the present invention has been explained.

According to the embodiment, the security can be verified evenwhen an attacker selects randomoracle (function) unfairly on the premise of the difficulty of the Decisional Diffie-Hellman problem on the group G (hereinafter, referred to as aggressive random oracle in contrast to ordinary random oracle). That is, according to the embodiment, it can be verified that it is difficult for passive attack (an attacker does not utilize decryption oracle) to calculate not only a message but also an input value to a random oracle from a cipher text (by a conventional method similar to a mathematical method in the conventional concept of semantic security or indistiguishability (IND). Thereby, it can be verified that the aggressive random oracle is provided with an advantage over ordinary random oracle by a negligible probability.

From the above-described, secure public key cryptograph communication can be realized even when an attacker to a public key cryptograph selects a random function providing random oracle.

Eighth Embodiment

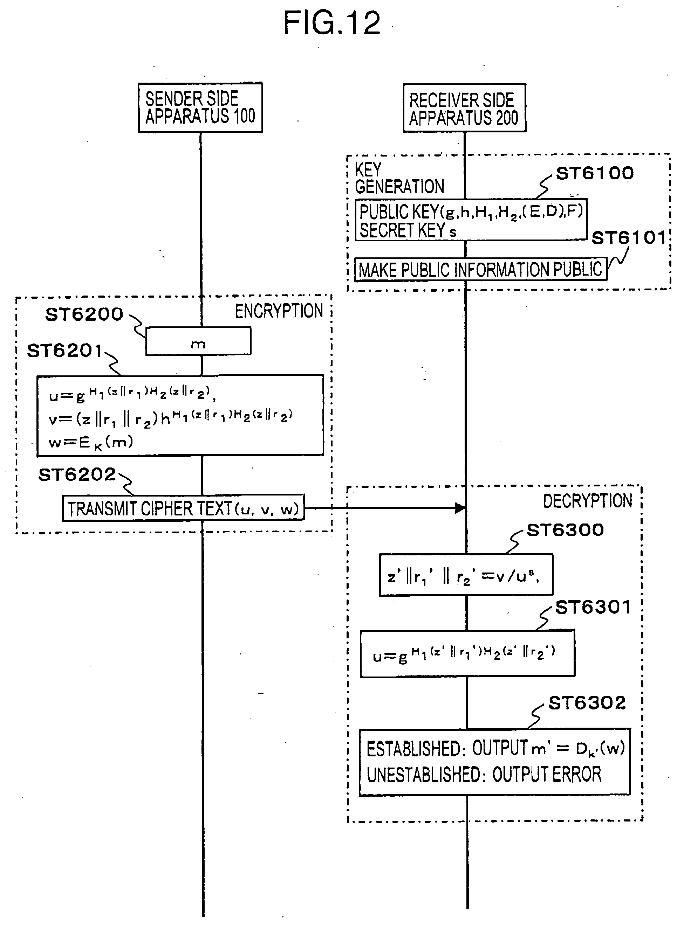

Next, an eighth embodiment of the present invention will be explained. The embodiment is a hybrid system of the above-described seventh embodiment and a common key cryptograph. Fig. 12 is a view for explaining an operational procedure of the eighth embodiment according to the invention.

1. Key generating processing

At the receiver side apparatus 200, the key generating unit 201 generates a secret key s of the receiver B and a public key (g, h, $H_1$, $H_2$, (E, D) , F) of the receiver B respectively by the following equation 87 and equation 88 in accordance with an instruction from the receiver B (the operator of the receiver side apparatus 200). Then the key generating unit 201 stores the information thus generated in the storing unit 205 (ST6100).

$$\bullet\ s \in \mathbb{Z}_q \qquad \cdots \text{Eq.87}$$

$$\bullet\ g \in G$$

$$\bullet\ h = g^s$$

$$\bullet\ H_1 : \{0,1\}^{k_0+k_1} \longrightarrow \mathbb{Z}_q \quad \text{Random function},$$

$$\bullet\ H_2 : \{0,1\}^{k_0+k_2} \longrightarrow \mathbb{Z}_q \quad \text{Random function}$$

$$\bullet\ (E, D) : \text{Common key decryption algorism}$$

$$\bullet\ F : \text{Key generating function} \qquad \cdots \text{Eq.88}$$

Here, notation G designates a finite abelian group and there is a one-to-one correspondence regarding elements of {0,1}$^k$ as elements of G.

Next, the receiver B informs public information including information (g, h) generated by the key generating unit 201 of the receiver side apparatus 200 to the sender A (operator of sender side apparatus 100) (ST6101) . For example, in the receiver side apparatus 200, the key generating unit 201 transmits the public information to the sender side apparatus 100 via the communication unit 206 in accordance with an instruction from the receiver B. Or, the receiver B publishes the public information by a well-known method, for example, registering to a third party (a public information control organization) or the like. The public information is stored in the storing unit 105 of the sender side apparatus 100. The random functions $H_1$ and $H_2$, a common key cryptograph algorism (E, D) and a key generating function F included in the public key may previously be set to the sender side apparatus 100 and the receiver side apparatus 200. Or, the random functions $H_1$ and $H_2$, the common key cryptograph algorism (E, D) and the key generating function F separated from the public key, may be put in a public domain.

2. Encryption processing

At the sender side apparatus 100, the input unit 107 receives input of a message m from the sender A (ST6200) . By receiving the input, the random number generating unit 101 selects random numbers $z \in \{0,1\}^{k0}$, $r_1 \in \{0,1\}^{k1}$ and $r_2 \in \{0,1\}^{k2}$ for themessagem. Here, the randomnumbers z, $r_1$ and $r_2$ are selected uniformly among a sufficiently large set, so that selected value cannot be predicted from the set. Then, the encryption unit 103-calculates a key K=F(z) by using the random number z and the key generating function F previously stored in the storing unit 105. Next, the encryption unit 103 calculates the following equation 89 with the power calculating unit 102 by using the key K, the random numbers z, $r_1$ and $r_2$ and the public key (g, h, $H_1$, $H_2$, (E, D) ) previously stored in the storing unit 105 (ST6201).

$$u = g^{H_1(z\|r_1)H_2(z\|r_2)}$$

$$v = (z\|r_1\|r_2)h^{H_1(z\|r_1)H_2(z\|r_2)},$$

$$w = E_K(m) \qquad \text{Eq.89}$$

Here, notation $E_K(m)$ signifies a result of encrypting the message text m by using the common key encryption algorism E with the key K.
Next, the encryption unit 103 transmits a calculation result (u, v, w) of the equation 89 as a cipher text of the message m to the receiver side apparatus 200 via the communication network 300 (ST6202).

3. Decryption processing

At the receiver side apparatus 200, the communication unit 206 receives the cipher text (u, v, w) from the sender side apparatus 100 via the communication network 300 and stores the cipher text in the storing unit 205. Now, the decryption unit 203 calculates (z', $r_1$', $r_2$') satisfying the following equation 90 from the cipher text (u, v, w) stored in the storing unit 205 with the power calculating unit 202 by using the secret key s of the receiver B stored in the storing unit 205 in accordance with an instruction from the receiver B (ST6300).

$$z'\|r_1'\|r_2' = v/u^s, \qquad \text{Eq.90}$$

Here, $z' \in \{0,1\}^{k0}$, $r_1' \in \{0,1\}^{k1}$, $r_2' \in \{0,1\}^{k2}$ and bit lengths of z' , $r_1$' and $r_2$' are already known.
Next, the decryption unit 203 confirms whether the following equation 91 is establishedwith the power calculating unit 202 by using a calculation result (z', $r_1$' , $r_2$' ) of the equation 90 (ST6301).

$$u = g^{H_1(z'\|r_1')H_2(z'\|r_2')} \qquad \text{Eq.91}$$

Then, the decryption unit 203 calculates a key K'=F(z') by using the key generating function F previously stored in the storing unit 205 only when it is confirmed that the equation 91 is established. Further, the decryption unit 203 calculates the following equation 92 by using the key K' and the common key cryptograph algorism (E, D) previously stored in the storing unit 205 . Next, the decryption unit 203 outputs a calculation result m' of the equation 92 as the message of the cipher text (u, v, w) .

$$m' = D_{K'}(w) \qquad\qquad \text{Eq.92}$$

Here, notation $D_{k'}(w)$ signifies a result of decrypting the cipher text W by using the common key decryption algorism D with the key K'.

Meanwhile, when it is not confirmed that the equation 91 is established, the decryption unit 203 rejects calculation of the equation 92 and outputs, for example, an error message or the like from the output unit 207 instead thereof (ST6302).

The eighth embodiment of the present invention has been explained.

The embodiment is the hybrid systemof the above-described seventh embodiment and the common key cryptograph. Therefore, in addition to the effect of the above-described seventh embodiment, there is an advantage of being capable of subjecting a message having an arbitrary length to cryptograph communication.

Ninth embodiment

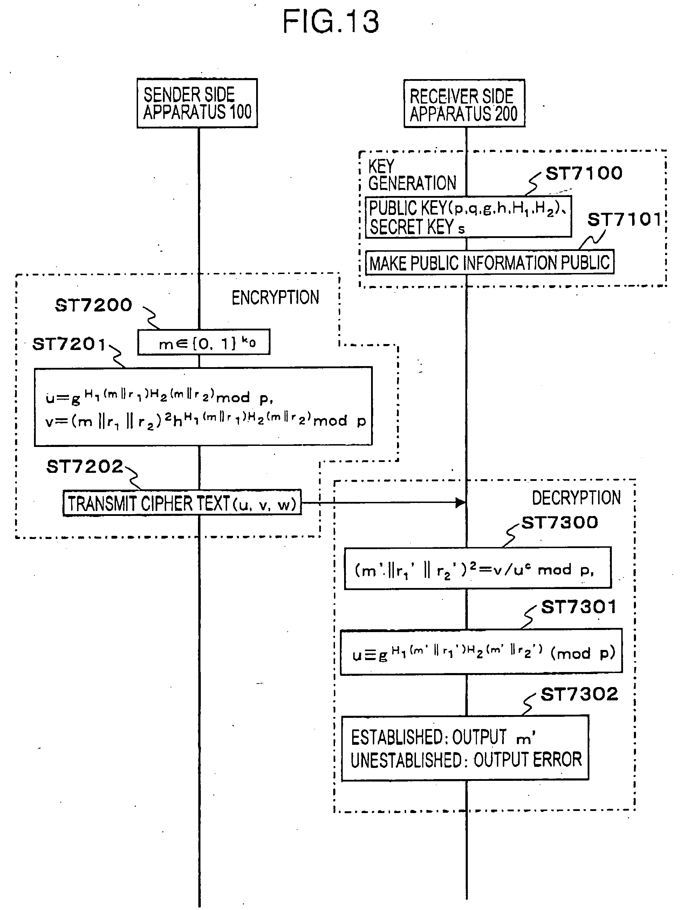

Next, a ninth embodiment of the present invention will be explained. According to the embodiment, in the above-described seventh embodiment, the finite abelian group G is given as a multiplication group determined by a field Zp. Fig. 13 is a view for explaining an operational procedure of the ninth embodiment of the present invention.

1. Key generating processing

At the receiver side apparatus 200, the key generating unit 201 generates a secret key s of the receiver B and a public key (p, q, g, h, $H_1$, $H_2$) of the receiver B respectively by the following equation 93 and equation 94 in accordance with an instruction from the receiver B (the operator of the receiver side apparatus 200). Then, the key generating unit 201 stores the information thus generated in the storing unit 205 (ST7100).

$$\bullet\; s \in \mathbb{Z}_q \qquad\qquad \cdots \text{Eq.93}$$

$$\bullet\; p, q : \text{Prime number,} \quad p - 1 = 2q$$

$$\bullet\; g \in \mathbb{Z}_p^* : \text{ord}_p(g) = q$$

$$\bullet\; h = g^s \bmod p$$

$$\bullet\; H_1 : \{0,1\}^{k_0+k_1} \longrightarrow \mathbb{Z}_q \quad \text{Random function,}$$

$$\bullet\; H_2 : \{0,1\}^{k_0+k_2} \longrightarrow \mathbb{Z}_q \quad \text{Random function}$$

$$\cdots \text{Eq.94}$$

Here, |p|=k+1.

Next, the receiver B informs public information including the information (p, q, g, h) generated by the key generating unit 201 of the receiver side apparatus 200 to the sender A (the operator of the sender side apparatus 100) (ST7101). For example, at the receiver side apparatus 200, the key generating unit 201 transmits the public information to the sender Apparatus 100 via the communication unit 206 in accordance with an instruction from the receiver B. Or, the receiver B publishes the public information by a well-known method, for example, registering to a third party (a public information control organization) or the like. The public information is stored in the storing unit 105 of the sender side apparatus 100. The random functions $H_1$ and $H_2$ included in the public key may previously be set to the sender side apparatus 100 and the receiver side apparatus 200. Or, the random functions $H_1$ and $H_2$ separated from the public key, may be put in a public domain.

2. Encryption processing

At the sender side apparatus 100, the input unit 107 receives input of a message m(m∈ {0,1}$^{k0}$) from the sender A (ST7200) . By receiving theinput,therandom number generating unit 101 selects random numbers $r_1 \in$ {0,1}$^{k1}$ and $r_2 \in$ {0,1}$^{k2}$ for the message m. Here, the random numbers $r_1$ and $r_2$ are selected uniformly among a sufficiently large set, so that value cannot be predicted from the set. Then, the encryption unit 103 calculates the following equation 95 with the power generating unit 102 and the modulo calculating unit 104 by using the random number $r_1$, $r_2$ and the public key (p, q, g, h, $H_1$, $H_2$) previously stored in the storing unit 105 (ST7201).

$$u = g^{H_1(m\|r_1)H_2(m\|r_2)} \bmod p,$$

$$v = (m\|r_1\|r_2)h^{H_1(m\|r_1)H_2(m\|r_2)} \bmod p, \qquad \text{Eq.95}$$

Next, the encryption unit 103 transmits a calculation result (u, v) of the equation 95 as a cipher text of the message m to the receiver side apparatus 200 via the communication network 300 (ST7202).

3. Decryption-processing

At the receiver side apparatus 200, the communication unit 206 receives the cipher text (u, v) from the sender side apparatus 100 via the communication network 300 and stores the cipher text in the storing unit 205. Now, the decryption unit 203 calculates (m', $r_1$', $r_2$') satisfying the following equation 96 from the cipher text (u, v) stored in the storing unit 205 with the power calculating unit 202 and the modulo calculating unit 204 by using the secret key s of the receiver B stored in the storing unit 205 in accordance with an instruction from the receiver B (ST7300).

$$(m'\|r_1'\|r_2') = v/u^s \bmod p, \qquad \text{Eq.96}$$

Here, m' $\in$ {0,1}$^{k0}$, $r_1$'$\in$ {0,1}$^{k1}$, $r_2$' $\in$ {0,1}$^{k2}$ and bit lengths of m', $r_1$' and $r_2$' are already known.
Next, the decryption unit 203 confirms whether the following equation 97 is established, with the power calculating unit 202 and the modulo calculating unit 204 by using a calculation result (m', $r_1$', $r_2$') of the equation 96 (ST7301).

$$u \equiv g^{H_1(m'\|r_1')H_2(m'\|r_2') \,(\bmod\, p)} \qquad \text{Eq.97}$$

Then, the decryption unit 203 outputs a decryption result m' from the output unit 207 only when it is confirmed that the equation 97 is established. Meanwhile, when it is not confirmed that the equation 97 is established, the decryption unit 203 rejects output of the decryption result m' and outputs, for example, an error message or the like from the output unit 207 instead thereof (ST7302).
The ninth embodiment of the present invention has been explained.
According to the embodiment, by a method similar to that in the case of the above-described seventh embodiment on the premise of the difficulty of the Decisional Diffie-Hellman problem on group Z$^*_p$, even when an attacker to the public key cryptograph selects a random function giving random oracle, secure public key cryptograph communication which can be realized.

Tenth Embodiment

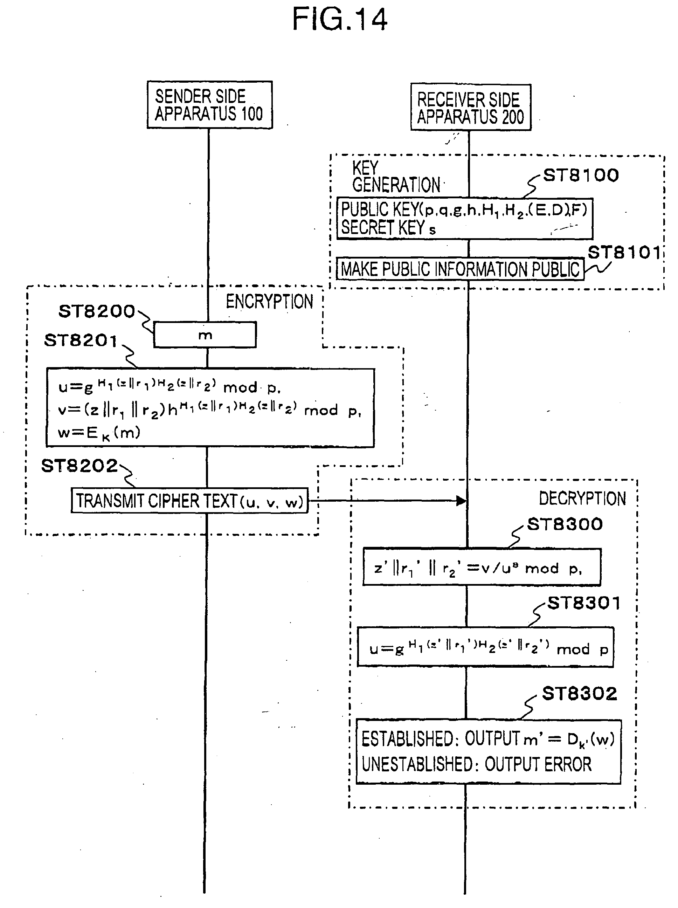

Next, a tenth embodiment of the invention will be explained. The embodiment is a hybrid system of the above-described ninth embodiment and the common key cryptograph. Fig. 14 is a view for explaining an operational procedure of the tenth embodiment according to the present invention.

1. Key generating processing

At the receiver side apparatus 200, the key generating unit 201 generates a secret key s of the receiver B and a public key (p, q, g, h, $H_1$, $H_2$, (E, D) , F) of the receiver B respectively by the following equation 98 and Equation 99 in accordance with an instruction from the receiver B (the operator of the receiver side apparatus 200). Then, the key generating unit 201 stores the information in the storing unit 205 (ST8100).

$$\bullet\; s \in \mathbb{Z}_q \qquad \cdots \text{Eq.98}$$

$$\bullet\; p, q : \text{Prime number},\quad q\,|\,(p-1)$$

$$\bullet\; g \in G$$

$$\bullet\; h = g^s \bmod p$$

$$\bullet\; H_1 : \{0,1\}^{k_0+k_1} \longrightarrow \mathbb{Z}_q \quad \text{Random function},$$

$$\bullet\; H_2 : \{0,1\}^{k_0+k_2} \longrightarrow \mathbb{Z}_q \quad \text{Random function}$$

$$\bullet\; (E, D) : \text{Common key decryption algorism}$$

$$\bullet\; F : \text{Key generating function} \qquad \cdots \text{Eq.99}$$

Here, notation G signifies a partial group of a multiplication group $Z_p{}^+$ comprising q of elements and with regard to $|p|=k$, $k=k_0+k_1+k_2$. B informs public information including

Next, the receiverB informs public information including the information (p, q, g, h) generated by the key generating unit 201 of the receiver side apparatus 200 to the sender A (the operator of the sender side apparatus 100) (ST8101). For example, at the receiver side apparatus 200, the key generating unit 201 transmits the public information to the sender side apparatus 100 via the communication unit 206 in accordance with an instruction from the receiver B. Or, the receiver B publishes public information by a well-known method, for example, registering to a third party (a public information control organization) or the like. The public information is stored in the storing unit 105 of the sender side apparatus 100 . The random functions $H_1$ and $H_2$, the common key cryptograph algorism (E, D) and the key generating function F included in the public key may previously be set to the sender side apparatus 100 and the receiver side apparatus 200. Or, the random functions $H_1$ and $H_2$, the common key cryptograph algorism (E, D) and the key generating function F separated from the public key, may be put in a public domain.

2. Encryption processing

At the sender side apparatus 100, the input unit 107 receives input of a message m from the sender A (ST8200). By receiving the input, the random number generating unit 101 selects random numbers $z \in \{0,1\}^{k0}$, $r_1 \in \{0,1\}^{k1}$ and $r_2 \in \{0,1\}^{k2}$ such that $z\|r_1\|r_2$ become elements of group G for the message m. Here, decision of whether $x \in Z_p{}^+$ is an element of group G is achieved by, for example, investigating whether the following equation 100 is established.

$$x^q \equiv 1 \;(\bmod\; p) \qquad\qquad \text{Eq.100}$$

Here, random numbers z, $r_1$ and $r_2$ are selected uniformly among a suf ficiently large set, so that value cannot be predicted from the set. Then, the encryption unit 103 calculates a key K=F (z) by using the random number and the key generating function F previously stored in the storing unit 105. Next, the encryption unit 103 calculates the following equation 101 with the power calculating unit 102 and the modulo calculating unit 104 by using the key K, the random numbers z, $r_1$ and $r_2$ and the public key (g, h, $H_1$, $H_2$, (E, D) ) of the receiver B previously stored in the storing unit 105 (ST8201).

$$u = g^{H1\left(z\|r1\right)H2\left(z\|r2\right)} \bmod p,$$

$$v = (z\|r_1\|r_2)h^{H1(z\|r1)H2(z\|r2)} \bmod p,$$

$$w = E_K(m) \tag{Eq.101}$$

Here, notation $E_K(m)$ signifies a result of encrypting the message text m by using the common key cryptograph algorism E with the key K.

Next, the encryption unit 103 transmits a calculation result (u, v, w) of the equation 101 as a cipher text of the message m to the receiver side apparatus 200 via the communication network 300 (ST8202).

3. Decryption processing

At the receiver side apparatus 200, the communication unit 206 receives the cipher text (u, v, w) from the sender side apparatus 100 via the communication network 300 and stores the cipher text in the storing unit 205. Now, the decryption unit 203 calculates $(z', r_1, r_2')$ satisfying the following equation 102 from the cipher text (u, v, w) stored in the storing unit 205 with the power calculating unit 202 and the modulo calculating unit 204 by using the secret key s of the receiver stored in the storing unit 205 in accordance with an instruction from the receiver B (ST9300).

$$z'\|r_1'\|r_2' = v/u^s \bmod p, \tag{Eq.102}$$

Here, $z' \in \{0,1\}^{k0}$, $r_1' \in \{0,1\}^{k1}$, $r_2' \in \{0,1\}^{k2}$ and bit lengths of z', $r_1$' and $r_2$' are already known.

Next, the decryption unit 203 confirms whether the following equation 103 is established, with the power calculating unit 202 and the modulo calculating unit 204 by using a calculation result (z', $r_1$' , $r_2$' ) of the equation 102 (ST8301).

$$u = g^{H_1(z'\|r_1')H_2(z\|r_2') \ (\bmod \ p)} \tag{Eq.103}$$

Then, the decryption unit 203 calculates a key k'=F(z') by using the key generating function F previously stored in the storing unit 205 only when it is confirmed that the equation 103 is established. Further, the decryption unit 203 calculates the following equation 104 by using the key K' and the common key cryptograph algorism (E, D) previously stored in the storing unit 205. Next, the decryption unit 203 outputs a calculation result m' of the equation 104 as a message of the cipher text (u, v, w).

$$m' = D_K'(w) \tag{Eq.104}$$

Here, notation $D_{K'}(w)$ signifies a decryption result by using the common key cryptograph algorism D with the key K' .

Meanwhile, when it is not confirmed that the equation 103 is established, the decryption unit 203 rejects calculation of the equation 104 and outputs, for example, an error message or the like from the output unit 207 instead thereof (ST8302) .

The tenth embodiment of the present invention has been explained.

The embodiment is the hybrid system of the above-described ninth embodiment and the common key cryptograph. Therefore, in addition to the effect of the above-described ninth embodiment, there is an advantage of being capable of subjecting a message having an arbitrary length to cryptograph communication.

The respective embodiments of the present invention have been explained.

The present invention is not finite to the above-described respective embodiments but can variously be modified within a range of gist thereof.

For example, although according to the respective embodiments, an explanation has been given by taking an example of general communication system for carrying out cryptograph communication with the respective apparatus by the sender And the receiver, the present invention is applicable to various systems.

For example, according to an electronic shopping system, a sender is a user, the sender side apparatus is a computer such as a personal computer or the like, the receiver is a retail shop, and the receiver side apparatus is a computer such as a personal computer or the like. In this case, an order sheet of a commodity or the like of the user is frequently encrypted by a common key cryptograph and an encryption key at this occasion is encrypted by the public key cryptograph communication method according to the invention and is transmitted to the receiver (retail shop) side apparatus.

Further, according to an electronic mail system, respective apparatus are computers of personal computers or the like and a transmission text (mail) is frequently encrypted by a common key cryptograph. In this case, the common key is encrypted by the public key cryptograph communication method according to the invention and is transmitted to the computer of the receiver.

Other than these, the present invention is applicable to various systems using a conventional public key cryptograph.

Further, an explanation has been given such that respective calculations of the above-described respective embodiments are carried out by executing programs loaded on memories by CPU. However, the calculation is carried out not only by programs. An apparatus for carrying any calculation may be constituted by an operational apparatus formed by a hardware for exchanging data with other operational apparatus or CPU.

As has been explained above, according to the present invention, there can be provided the cryptograph communication technology to using the public key cryptograph which can be verified to be secure even when an attacker to the public key cryptograph selects a random function giving random oracle.

## Claims

1. A public key cryptograph communication method in which a sender side apparatus generates a cipher text of a message by using a random function and a public key of a receiver and transmits the cipher text to a receiver side apparatus, and the receiver side apparatus decrypts the cipher text received from the sender side apparatus by using the random function and a secret key paired with the public key, wherein
the sender side apparatus generates the cipher text so that partial information concerning an input value to the random function is non-malleable against the cipher text and transmits the cipher text to the receiver side apparatus.

2. The public key cryptograph communication method according to Claim 1, wherein
the sender side apparatus generates the cipher text so that the partial information concerning the input value to the random function is non-malleable against the cipher text and a verification data for verifying that the sender side apparatus knows the input value is included in the cipher text, and
the receiver side apparatus confirms fairness of the verification data included in the cipher text received from the sender side apparatus and outputs a result of decrypting the cipher text only when the fairness is confirmed.

3. The public key cryptograph communication method according to Claim 2, wherein
the receiver side apparatus confirms the fairness of the verification data by using the cipher text including the verification data and the random function.

4. The public key cryptograph communication method according to Claim 2, wherein
the secret key is an equation 1

$$\bullet\ x \in \mathbb{Z}_q \quad \cdots \mathrm{Eq.1}$$

The public key is an equation 2

$$\bullet\ g \in G$$

$$\bullet\ h = g^x$$

$$\bullet\ H_1 : \{0,1\}^{k_1} \longrightarrow \mathbb{Z}_q \quad \text{Random function},$$

$$\bullet\ H_2 : \{0,1\}^{k_2} \longrightarrow \mathbb{Z}_q \quad \text{Random function}$$

$$\bullet\ H_3 : \{0,1\}^{k_1+k_2} \longrightarrow \{0,1\}^n \quad \text{Random function}$$

$$\bullet\ (E,D) : \text{Common key decryption algorism}$$

$$\cdots \text{Eq.2}$$

(incidentally, notation G designates a finite abelian group and there is a one-to-one correspondence between an element of G and an element of $\{0,1\}^k$. Further, n may be equal to or larger than or less than $k_1+k_2$) ;

the sender side apparatus selects random numbers $r_1 \in \{0,1\}^{k1}$ and $r_2 \in \{0,1\}^{k2}$ for a message $m \in \{0,1\}^n$, calculates an equation 3

$$u = g^{H_1(r_1)H_2(r_2)},$$

$$v = (r_1\|r_2)h^{H_1(r_1)H_2(r_2)},$$

$$w = E_K(m) \qquad (k = H_3(r_1\|r_2)) \tag{Eq.3}$$

(incidentally, notation $E_K(m)$ signifies a result of encrypting the message text m by using a common key encryption algorism E with a key K), and treats a calculation result (u, v, w) as the cipher text; and

the receiver side apparatus calculates ($r_1'$, $r_2'$) specified an equation 4 by using the secret key

$$r_1'\|r_2' = v/u^x, \tag{Eq.4}$$

(incidentally, $r_1' \in \{0, 1\}^{k1}$, $r_2' \in \{0, 1\}^{k2}$ and bit lengths of $r_1'$ and $r_2'$ are already known), confirms the fairness of the verification data by confirming establishment of an equation 5

$$u = g^{H_1(r_1')H_2(r_2')},$$

$$v = (r_1'\|r_2')h^{H_1(r_1')H_2(r_2')}, \tag{Eq.5}$$

, calculates m' , only when the confirmation is succeeded, by an equation 6

$$m' = D_{K'}(w) \qquad (k' = H_3(r_1'\|r_2')) \tag{Eq.6}$$

(incidentally, notation $D_{K'}(w)$ signifies a result of decrypting the cipher text w by using a common key encryption algorism D with a key K' ) , and outputs a result of decrypting the cipher text by Creating m' as the message of the cipher text (u, v, w).

5. The public key cryptograph communication method according to Claim 2, wherein the secret key is an equation 7

$$\bullet \; x \in \mathbb{Z}_q \qquad \cdots \mathrm{Eq.7}$$

the public key is an equation 8

$$\bullet \; p : \text{Prime number} \quad (q|p-1)$$
$$\bullet \; g \in \mathbb{Z}_p$$
$$\bullet \; h = g^x \bmod p$$
$$\bullet \; H_1 : \{0,1\}^{k_1} \longrightarrow \mathbb{Z}_q \quad \text{Random function},$$
$$\bullet \; H_2 : \{0,1\}^{k_2} \longrightarrow \mathbb{Z}_q \quad \text{Random function}$$
$$\bullet \; H_3 : \{0,1\}^{k_1+k_2} \longrightarrow \{0,1\}^n \quad \text{Random function}$$
$$\bullet \; (E, D) : \text{Common key decryption algorism}$$
$$\cdots \mathrm{Eq.8}$$

(incidentally, there is a one-to-one correspondence between elements of $Z_p$ and elements of $\{0,1\}^k$. Further, n may be equal to or larger or less than $k_1+k_2$);

the sender side apparatus selects random numbers $r_1 \in \{0,1\}^{k1}$ and $r_2 \in \{0,1\}^{k2}$ for a message $m \in \{0,1\}^n$, calculates an equation 9

$$u = g^{H_1(m)H_2(r)} \bmod p,$$
$$v = (m\|r)h^{H_1(m)H_2(r)} \bmod p,$$
$$w = E_K(m) \qquad (k = H_3(r_1\|r_2)) \qquad\qquad \text{Eq.9}$$

(incidentally, notation $E_K(m)$ signifies a result of encrypting the message text m by using a common key encryption algorism E with a key K) , and treats a calculation (u, v, w) as the cipher text; and

the receiver side apparatus calculates ($r_1'$, $r_2'$) specified an equation 10 by using the secret key

$$r_1'\|r_2' = v/u^x \bmod p, \qquad\qquad \text{Eq.10}$$

(incidentally, $r_1 \in \{0,1\}^{k1}$, $r_2 \in \{0,1)^{k2}$ and bit lengths of $r_1'$ and $r_2'$ are already known), confirm the fairness of the verification data by confirming establishment of an equation 11

$$u = g^{H_1(r_1')H_2(r_2')} \bmod p,$$
$$v = (r_1'\|r_2')h^{H_1(r_1')H_2(r_2')} \bmod p, \qquad\qquad \text{Eq.11}$$

, calculates m', only when the confirmation is succeeded, by an equation 12

$$m' = D_{K'}(w) \qquad (k' = H_3(r_1'\|r_2')) \qquad\qquad \text{Eq.12}$$

(incidentally, notation $D_K'$ (w) signifies a result of decrypting the cipher text w by using a common key decryption algorism D with a key K'), and outputs a result of decrypting the cipher text by treating m' as the message of the cipher text (u, v, w).

**6.** The public key cryptograph communication method according to Claim 1, wherein
the sender side apparatus selects the input value to the random function uniformly among a sufficiently large set prior to generating the cipher text.

**7.** The public key cryptograph communication method according to Claim 6, wherein
the sender side apparatus generates the cipher text so that it is difficult to generate the cipher text without knowing the message.

**8.** The public key cryptograph communication method according to Claim 6, wherein
the secret key is an equation 13

$$\bullet\ s \in \mathbb{Z}_q \qquad \cdots \text{Eq.13}$$

the public key is an equation 14

$$\bullet\ g \in G$$
$$\bullet\ h = g^s$$
$$\bullet\ H_1 : \{0,1\}^{k_0+k_1} \longrightarrow \mathbb{Z}_q \quad \text{Random function},$$
$$\bullet\ H_2 : \{0,1\}^{k_0+k_2} \longrightarrow \mathbb{Z}_q \quad \text{Random function} \qquad \cdots \text{Eq.14}$$

(incidentally, notation G designates a finite abelian group and there is a one-to-one correspondence for regarding elements of $\{0,1\}^k$ as elements of G);
the sender side apparatus selects random numbers $r_1 \in \{0,1\}^{k_1}$ and $r_2 \in \{0,1\}^{k_2}$ for the message $m \in \{0,1\}^{k_0}$, calculates an equation 15

$$u = g^{H_1(m\|r_1)H_2(m\|r_2)},$$
$$v = (m\|r_1\|r_2)h^{H_1(m\|r_1)H_2(m\|r_2)}, \qquad \text{Eq.15}$$

, and treats a calculation result (u, v) as the cipher text; and
the receiver side apparatus calculates (m', $r_1'$, $r_2'$) specified an equation 16 by using the secret key

$$m'\|r_1'\|r_2' = v/u^s, \qquad \text{Eq.16}$$

(incidentally, $m' \in \{0,1\}^{k_0}$, $r_1' \in \{0,1\}^{k_1}$, $r_2' \in \{0,1\}^{k_2}$ and bit lengths of m', $r_1'$ and $r_2'$ are already known), confirms establishment of an equation 17

$$u = g^{H_1(m'\|r_1')H_2(m'\|r_2')} \qquad \text{Eq.17}$$

and outputs a result of decrypting the cipher text by treating m' as the message of the cipher text (u, v) only when the confirmation is succeeded.

**9.** The public key cryptograph communication method according to Claim 6, wherein the secret key is an equation 18

$$\bullet\ s \in \mathbb{Z}_q \qquad \cdots \text{Eq.}18$$

the public key is an equation 19

$$\bullet\ g \in G$$

$$\bullet\ h = g^s$$

$$\bullet\ H_1 : \{0,1\}^{k_0+k_1} \longrightarrow \mathbb{Z}_q \quad \text{Random function},$$

$$\bullet\ H_2 : \{0,1\}^{k_0+k_2} \longrightarrow \mathbb{Z}_q \quad \text{Random function}$$

$$\bullet\ (E, D) : \quad \text{Common key decryption algorism}$$

$$\bullet\ F : \text{Key generating function} \qquad \cdots \text{Eq.}19$$

(incidentally, notation G designates a finite abelian group and there is a one-to-one correspondence regarding elements of $\{0,1\}^k$ as elements of G); the sender side apparatus selects random numbers $r_0 \in \{0,1\}^{k0}$, $r_1 \in \{0,1\}^{k1}$ and $r_2 \in \{0,1\}^{k2}$ for a message m, calculates an equation 20 as K=F(z)

$$u = g^{H_1(z\|r_1)H_2(z\|r_2)},$$

$$v = (z\|r_1\|r_2)h^{H_1(z\|r_1)H_2(z\|r_2)},$$

$$w = E_K(m) \qquad\qquad\qquad \text{Eq.20}$$

(incidentally, notation $E_K(m)$ signifies a result of encrypting the message text m by using a common key encryption algorism E with a key K), and treats a calculation result (u, v, w) as the cipher text; and the receiver side apparatus calculates (z', $r_1$', $r_2$') specified an equation 21 by using the secret key

$$z'\|r_1'r_2' = v/u^s, \qquad\qquad\qquad \text{Eq.21}$$

(incidentally, $z' \in \{0,1\}^{k0}$, $r_1' \in \{0,1\}^{k1}$, $r_2' \in \{0,1\}^{k2}$ and the bit lengths of z', $r_1$', $r_2$' are already known), confirms establishment of an equation 22

$$u = g^{H_1(z'\|r'_1)H_2(z'\|r'_2)} \qquad\qquad\qquad \text{Eq.22}$$

, only when the confirmation is succeeded, calculates m' by an equation 23 as K'=F(z')

$$m' = D_{K'}(w) \qquad\qquad\qquad \text{Eq.23}$$

(incidentally, notation $D_{x'}(w)$ signifies a result of decrypting the cipher text w by-using a common key encryption algorism D with a key K'), and outputs a result of decrypting the cipher text by treating m' as the message of the cipher text (u, v, w).

**10.** The public cryptograph communication method according to Claim 6, wherein the secret key is an equation 24

$$\bullet \; s \in \mathbb{Z}_q \qquad \cdots \text{Eq.24}$$

the public key is an equation 25

$$\bullet \; p, q : \text{Prime number}, \quad p - 1 = 2q$$

$$\bullet \; g \in \mathbb{Z}_p^* : \text{ord}_p(g) = q$$

$$\bullet \; h = g^s \bmod p$$

$$\bullet \; H_1 : \{0,1\}^{k_0 + k_1} \longrightarrow \mathbb{Z}_q \quad \text{Random function},$$

$$\bullet \; H_2 : \{0,1\}^{k_0 + k_2} \longrightarrow \mathbb{Z}_q \quad \text{Random function}$$

$$\cdots \text{Eq.25}$$

(incidentally, $|q|=k+1$);
the sender side apparatus selects random numbers $r_1 \in \{0,1\}^{k1}$ and $r_2 \in \{0,1\}^{k2}$ for a message $m \in \{0,1\}^{k0}$, calculates an equation 26

$$u = g^{H_1(m\|r_1)H_2(m\|r_2)} \bmod p,$$

$$v = (m\|r_1\|r_2)h^{H_1(m\|r_1)H_2(m\|r_2)} \bmod p, \qquad \text{Eq.26}$$

, and treats a calculation result $(u, v)$ as the cipher text; and
the receiver side apparatus calculates $(m', r_1', r_2')$ specified an equation 27 by using the secret key

$$(m'\|r_1'\|r_2') = v/u^s \bmod p, \qquad \text{Eq.27}$$

(incidentally, $m' \in \{0,1\}^{k0}$, $r_1' \in \{0,1\}^{k1}$, $r_2' \in \{0,1\}^{k2}$ and bit lengths of $m'$, $r_1'$ and $r_2'$ are already known), confirms establishment of an equation 28

$$u \equiv g^{H_1(m'\|r'_1)H_2(m'\|r'_2)} \pmod p \qquad \text{Eq.28}$$

, and outputs a result of decrypting the cipher text by treating $m'$ as the message of the cipher text $(u, v)$ only when the confirmation is succeeded.

**11.** The public key cryptograph communication method according to Claim 6, wherein the secret key is an equation 29

$$\bullet \; s \in \mathbb{Z}_q \qquad \cdots \text{Eq.29}$$

the public key is an equation 30

$$\bullet\; p,q : \text{Prime number}, \quad q\,|\,(p-1)$$

$$\bullet\; g \in G$$

$$\bullet\; h = g^{s} \bmod p$$

$$\bullet\; H_1 : \{0,1\}^{k_0+k_1} \longrightarrow \mathbb{Z}_q \quad \text{Random function},$$

$$\bullet\; H_2 : \{0,1\}^{k_0+k_2} \longrightarrow \mathbb{Z}_q \quad \text{Random function}$$

$$\bullet\; (E,D) : \text{Common key decryption algorism}$$

$$\bullet\; F : \text{Key generating function} \qquad \cdots \text{Eq.30}$$

(incidentally, notation G signifies a partial group of a multiplication group $Z_p^+$ comprising q of elements and |p|=k); the sender side apparatus selects random numbers $z \in \{0,1\}^{k0}$, $r_1' \in \{0,1\}^{k1}$ and $r_2' \in \{0,1\}^{k2}$ for a message m so that $z\|r_1\|r_2$ constitutes an element of the group G, calculates an equation 31 as K=F(z)

$$u = g^{H_1(z\|r_1)H_2(z\|r_2)} \bmod p,$$

$$v = (z\|r_1\|r_2)h^{H_1(z\|r_1)H_2(z\|r_2)} \bmod p,$$

$$w = E_K(m) \tag{Eq.31}$$

(incidentally, notation $E_K$ (m) signifies a result of encrypting the message text m by using a common key encryption algorism E with a key K), and treats a calculation result (u, v, w) as the cipher text; and the receiver side apparatus calculates (z', $r_1'$, $r_2'$) specified an equation 32 by using the secret key

$$z'\|r_1'\|r_2' = v/u^{s} \bmod p, \tag{Eq.32}$$

(incidentally, $z' \in \{0,1\}^{k0}$, $r_1' \in \{0,1\}^{k1}$, $r_2' \in \{0,1\}^{k2}$ and bit lengths of z', $r_1'$ and $r_2'$ are already known, confirms establishment of an equation 33

[Equation 33]

$$u \equiv g^{H_1(z'\|r'_1)H_2(z'\|r'_2)} \quad (\bmod\ p) \tag{Eq.33}$$

, only when the confirmation is succeeded, calculates m' by an equation 34 as K'=F(z')

$$m' = D_K'(w) \tag{Eq.34}$$

(incidentally, notation $D_{K'}$ (w) signifies a result of decrypting the cipher text w by using a common key decryption algorism D with a key K') and outputs a result of decrypting the cipher text by treating m' as the message of the cipher text (u, v, w).

12. Apublic key cryptograph communicationmethod inwhich a sender side apparatus generates a cipher text of a message by using a hash function and a public key of a receiver and transmits the cipher text to a receiver side apparatus and the receiver side apparatus decrypts the cipher text received from the sender side apparatus by using the hash function and a secret key paired with the public key, wherein

the message can be calculated by an output value from the hash function used for generating the cipher text and the cipher text.

**13.** The public key-cryptograph communication method according to Claim 4, wherein
the receiver side apparatus generates the public key and the secret key and publishes public information (g, h).

**14.** The public key cryptograph communication method according to Claim 5, wherein
the receiver side apparatus generates the public key and the secret key and publishes a public information (p, g, h).

**15.** A sender side apparatus for generating a cipher text of a message by using a random function and a public key of a receiver and transmitting the cipher text to a receiver side apparatus, comprising:

means which generates the cipher text so that partial information concerning an input value to the random function is non-malleable against the cipher text; and
means which transmits the cipher text to the receiver side apparatus.

**16.** A receiver side apparatus comprising:

means which decrypts the cipher text received from the sender side apparatus according to Claim 15 by using the random function used in generating the cipher text and a secret key paired with the public key.

**17.** A program which is readable by a computer, wherein
the program constructs on the computer a sender side apparatus which generates a cipher text of a message by using a random function and a public key of a receiver and transmits the cipher text to a receiver side apparatus, by being executed by the computer,
the sender side apparatus comprising:

means which generates the cipher text so that partial information concerning an input value to the random function is non-malleable against the cipher text; and
means which transmits the cipher text to the receiver side apparatus.

**18.** A program which is readable by a computer, wherein
the program constructs on the computer a receiver side apparatus comprising means which decrypts a cipher text received from the sender side apparatus realized by the program according to Claim 17 by using the random function used in generating the cipher text and a secret key paired with the public key by being executed by the computer.

# FIG.1

# FIG.2

# FIG.3

RECEIVER SIDE
APPARATUS

200

COMMUNICATION UNIT — 206

201 — KEY GENERATING UNIT

MODULO CALCULATING UNIT — 204

202 — POWER CALCULATING UNIT

DECRYPTION UNIT — 203

STORING UNIT — 205

OUTPUT UNIT — 207

# FIG.4

401 CPU

402 MEMORY

403 EXTERNAL STORAGE UNIT

409

COMMUNICATION DEVICE

INPUT DEVICE

OUTPUT DEVICE

READER — 405

408

406

407

404

# FIG.5

SENDER SIDE APPARATUS 100

RECEIVER SIDE APPARATUS 200

KEY GENERATION — ST1100

PUBLIC KEY($g,h,H_1,H_2,H_3$), SECRET KEY $x$ — ST1101

MAKE PUBLIC INFORMATION PUBLIC

ENCRYPTION

ST1200 — $m \in \{0, 1\}^{k1}$

ST1201

$u = g^{H_1(m)H_2(r)}$,
$v = (m \| r)h^{H_1(m)H_2(r)}$,
$w = (m \| r) \oplus H_3(m \| r)$

ST1202

TRANSMIT CIPHER TEXT ($u, v, w$)

DECRYPTION

$m' \| r' = v/u^x$ — ST1300

ST1301

$u = g^{H_1(m')H_2(r')}$,
$v = (m' \| r')h^{H_1(m')H_2(r')}$,
$w = (m' \| r') \oplus H_3(m' \| r')$

ST1302

ESTABLISHED: OUTPUT $m'$
UNESTABLISHED: OUTPUT ERROR

# FIG.6

SENDER SIDE APPARATUS 100

RECEIVER SIDE APPARATUS 200

KEY GENERATION — ST1400

PUBLIC KEY($g, h, H_1, H_2, H_3, (E, D)$), SECRET KEY $x$ — ST1401

MAKE PUBLIC INFORMATION PUBLIC

ST1500 — ENCRYPTION

ST1501

$m \in [0, 1]^n$

$u = g^{H_1(r_1)H_2(r_2)}$,
$v = (m \| r)h^{H_1(m)H_2(r)}$,
$w = E_k(m)$

ST1502

TRANSMIT CIPHER TEXT ($u, v, w$)

DECRYPTION

$r_1' \| r_2' = v/u^x$, — ST1600

ST1601

$u = g^{H_1(r_1')H_2(r_2')}$,
$v = (r_1 \| r_2')h^{H_1(r_1')H_2(r_2')}$

ST1602

ESTABLISHED: OUTPUT $m' = D_{k'}(w)$

UNESTABLISHED: OUTPUT ERROR

# FIG.7

SENDER SIDE APPARATUS 100

RECEIVER SIDE APPARATUS 200

KEY GENERATION
ST2100

PUBLIC KEY$(p,g,h,H_1,H_2,H_3)$, SECRET KEY $x$

ST2101

MAKE PUBLIC INFORMATION PUBLIC

ST2200 ENCRYPTION

ST2201

$m \in \{0, 1\}^{k1}$

$u = g^{H_1(m)H_2(r)} \bmod p,$
$v = (m\|r)h^{H_1(m)H_2(r)} \bmod p,$
$w = (m\|r) \oplus H_3(m\|r)$

ST2202

TRANSMIT CIPHER TEXT$(u, v, w)$

DECRYPTION

$m'\|r' = v/u^x \bmod p,$ ST2300

ST2301

$u = g^{H_1(m')H_2(r')} \bmod p,$
$v = (m'\|r')h^{H_1(m')H_2(r')} \bmod p,$
$w = (m'\|r') \oplus H_3(m'\|r')$

ST2302

ESTABLISHED: OUTPUT $m'$
UNESTABLISHED: OUTPUT ERROR

38

# FIG.8

```
┌──────────────┐                    ┌──────────────┐
│ SENDER SIDE  │                    │RECEIVER SIDE │
│APPARATUS 100 │                    │APPARATUS 200 │
└──────────────┘                    └──────────────┘
```

KEY
GENERATION                           ST2400

PUBLIC KEY $(p, g, h, H_1, H_2, H_3, (E, D))$,
SECRET KEY $x$

MAKE PUBLIC INFORMATION PUBLIC  ST2401

ST2500                        ENCRYPTION

ST2501

$m \in \{0, 1\}^n$

$u = g^{H_1(m)H_2(r)} \bmod p$,

$v = (m \| r) h^{H_1(m)H_2(r)} \bmod p$,

$w = E_k(m)$

ST2502

TRANSMIT CIPHER TEXT $(u, v, w)$ ────────▶   DECRYPTION

$r_1' \| r_2' = v / u^x \bmod p$   ST2600

ST2601

$u = g^{H_1(r_1')H_2(r_2')} \bmod p$,

$v = (r_1' \| r_2') h^{H_1(r_1')H_2(r_2')} \bmod p$

ST2602

ESTABLISHED: OUTPUT $m' = D_{k'}(w)$

UNESTABLISHED: OUTPUT ERROR

# FIG.9

SENDER SIDE
APPARATUS 100

RECEIVER SIDE
APPARATUS 200

KEY GENERATION — ST3100

PUBLIC KEY $(g, h, H_1, H_2, H_3, G)$,
SECRET KEY $x$

ST3101

MAKE PUBLIC INFORMATION PUBLIC

ENCRYPTION

ST3200

ST3201

$m \in \{0, 1\}^n$

$u = g^{H_1(r_1)H_2(r_2)}$,
$v = (r_1 \| r_2) h^{H_1(r_1)H_2(r_2)}$,
$w = (r_1 \| r_2) \oplus H_3(r_1 \| r_2)$
$z = G(r_1 \| r_2) \oplus m$

ST3202

TRANSMIT CIPHER TEXT $(u, v, w)$

DECRYPTION

$r_1' \| r_2' = v / u^x$, — ST3300

ST3301

$u = g^{H_1(r_1')H_2(r_2')}$,
$v = (r_1' \| r_2') h^{H_1(r_1')H_2(r_2')}$,
$w = (r_1' \| r_2') \oplus H_3(r_1' \| r_2')$

ST3302

ESTABLISHED: OUTPUT $m' = z \oplus G(r_1' \| r_2')$
UNESTABLISHED: OUTPUT ERROR

# FIG.10

SENDER SIDE APPARATUS 100

RECEIVER SIDE APPARATUS 200

KEY GENERATION — ST4100

PUBLIC KEY $(p, g, h, H_1, H_2, H_3, G)$, SECRET KEY $x$

ST4101

MAKE PUBLIC INFORMATION PUBLIC

ST4200 — ENCRYPTION

ST4201

$m \in \{0, 1\}^n$

$u = g^{H_1(r_1)H_2(r_2)}$,
$v = (r_1 \| r_2) h^{H_1(r_1)H_2(r_2)}$,
$w = (r_1 \| r_2) \oplus H_3(r_1 \| r_2)$
$z = G(r_1 \| r_2) \oplus m$

ST4202

TRANSMIT CIPHER TEXT $(u, v, w)$

DECRYPTION

$r_1' \| r_2' = v/u^x \bmod p$, — ST4300

ST4301

$u = g^{H_1(r_1')H_2(r_2')} \bmod p$,
$v = (r_1' \| r_2') h^{H_1(r_1')H_2(r_2')} \bmod p$,
$w = (r_1' \| r_2') \oplus H_3(r_1' \| r_2')$

ST4302

ESTABLISHED: OUTPUT $m' = z \oplus G(r_1' \| r_2')$
UNESTABLISHED: OUTPUT ERROR

# FIG.11

```
┌──────────────────┐                    ┌──────────────────┐
│  SENDER SIDE     │                    │ RECEIVER SIDE    │
│  APPARATUS 100   │                    │ APPARATUS 200    │
└──────────────────┘                    └──────────────────┘
```

KEY GENERATION ········ ST5100

PUBLIC KEY $(g, h, H_1, H_2)$, SECRET KEY $s$ ········ ST5101

MAKE PUBLIC INFORMATION PUBLIC

ENCRYPTION

ST5200 — $m \in \{0, 1\}^{k_0}$

ST5201 —

$$u = g^{H_1(m \| r_1) H_2(m \| r_2)},$$
$$v = (m \| r_1 \| r_2) h^{H_1(m \| r_1) H_2(m \| r_2)}$$

ST5202 — TRANSMIT CIPHER TEXT $(u, v, w)$

DECRYPTION

ST5300

$$m' \| r_1' \| r_2' = v / u^s,$$

ST5301

$$u = g^{H_1(m' \| r_1') H_2(m' \| r_2')}$$

ST5302

ESTABLISHED : OUTPUT $m'$
UNESTABLISHED : OUTPUT ERROR

# FIG.12

```
┌─────────────────────┐                    ┌─────────────────────┐
│ SENDER SIDE         │                    │ RECEIVER SIDE       │
│ APPARATUS 100       │                    │ APPARATUS 200       │
└─────────────────────┘                    └─────────────────────┘
```

KEY GENERATION — ST6100

PUBLIC KEY $(g, h, H_1, H_2, (E,D), F)$
SECRET KEY $s$ — ST6101

MAKE PUBLIC INFORMATION PUBLIC

ENCRYPTION

ST6200 — $m$

ST6201

$$u = g^{H_1(z\|r_1)H_2(z\|r_2)},$$
$$v = (z\|r_1\|r_2) h^{H_1(z\|r_1)H_2(z\|r_2)}$$
$$w = E_K(m)$$

ST6202

TRANSMIT CIPHER TEXT $(u, v, w)$

DECRYPTION

ST6300

$$z'\|r_1'\|r_2' = v/u^s,$$

ST6301

$$u = g^{H_1(z'\|r_1')H_2(z'\|r_2')}$$

ST6302

ESTABLISHED: OUTPUT $m' = D_{k'}(w)$

UNESTABLISHED: OUTPUT ERROR

# FIG.13

SENDER SIDE
APPARATUS 100

RECEIVER SIDE
APPARATUS 200

KEY
GENERATION — ST7100

PUBLIC KEY$(p,q,g,h,H_1,H_2)$, — ST7101
SECRET KEY $s$

MAKE PUBLIC INFORMATION PUBLIC

ENCRYPTION

ST7200

ST7201

$m \in \{0, 1\}^{k_0}$

$$u = g^{H_1(m \| r_1)H_2(m \| r_2)} \bmod p,$$
$$v = (m \| r_1 \| r_2)^2 h^{H_1(m \| r_1)H_2(m \| r_2)} \bmod p$$

ST7202

TRANSMIT CIPHER TEXT$(u, v, w)$

DECRYPTION

ST7300

$$(m' \| r_1' \| r_2')^2 = v/u^c \bmod p,$$

ST7301

$$u \equiv g^{H_1(m' \| r_1')H_2(m' \| r_2')} \pmod p$$

ST7302

ESTABLISHED: OUTPUT $m'$
UNESTABLISHED: OUTPUT ERROR

# FIG.14

SENDER SIDE
APPARATUS 100

RECEIVER SIDE
APPARATUS 200

KEY GENERATION — ST8100

PUBLIC KEY$(p,q,g,h,H_1,H_2,(E,D),F)$
SECRET KEY $s$

ST8101
MAKE PUBLIC INFORMATION PUBLIC

ENCRYPTION

ST8200
$m$

ST8201
$u = g^{H_1(z\|r_1)H_2(z\|r_2)} \bmod p,$
$v = (z\|r_1\|r_2)h^{H_1(z\|r_1)H_2(z\|r_2)} \bmod p,$
$w = E_K(m)$

ST8202
TRANSMIT CIPHER TEXT$(u, v, w)$

DECRYPTION

ST8300
$z'\|r_1'\|r_2' = v/u^s \bmod p,$

ST8301
$u = g^{H_1(z'\|r_1')H_2(z'\|r_2')} \bmod p$

ST8302
ESTABLISHED: OUTPUT $m' = D_{k'}(w)$
UNESTABLISHED: OUTPUT ERROR